# EUROPÄISCHE PATENTSCHRIFT

(11) **EP 2 412 955 B1**
(45) Veröffentlichungstag und Bekanntmachung des Hinweises auf die Patenterteilung: **10.09.2014**
(21) Anmeldenummer: 11002521.0
(22) Anmeldetag: 26.03.2011
(51) Int. Cl.: F02D 9/06, F02D 41/00, F02B 37/22, F01L 13/06, F02D 13/04, F02B 37/02, F02B 37/18

(54) **Verfahren zur Motorbremsung**
Method for braking a motor
Procédé de freinage moteur

(30) Priorität: 26.07.2010 AT 12452010
(43) Veröffentlichungstag der Anmeldung: 01.02.2012
(73) Patentinhaber: MAN Truck & Bus Österreich AG, 4400 Steyr (AT)
(72) Erfinder: Rammer, Franz, 4493 Wolfern (AT); Leitenmayr, Franz, 4320 Perg (AT); Raab, Gottfried, 4320 Perg (AT)

(56) Entgegenhaltungen:
- EP-A1- 1 762 716
- EP-A2- 0 831 216
- WO-A1-2007/129970
- US-A- 5 692 469
- US-A- 6 101 812
- US-A- 6 155 049
- US-A1- 2001 017 033

## Beschreibung

Die vorliegende Erfindung betrifft ein Verfahren und eine Vorrichtung zur Motorbremsung mit einem vorzugsweise nach dem Dieselprinzip arbeitenden Motor, der zumindest einen von einem Abgasstrom beaufschlagten Abgasturbolader mit einer Abgasturbine und einem Ladeluftverdichter, die auf einer gemeinsamen Welle angeordnet sind, aufweist, mit einem Abgaskrümmer, der den Abgasstrom von Auslassventilen des Motors zum Abgasturbolader leitet, und mit einer zwischen den Auslassventilen und dem Abgasturbolader angeordneten Vorrichtung zur Drosselung des Abgasstroms, sowie einer Bypassleitung zum Vorbeiführen des Abgasstroms an der Vorrichtung zur Drosselung des Abgasstroms, wobei der Abgasstrom durch die Bypassleitung auf ein Turbinenrad der Abgasturbine geleitet wird, der Abgasstrom gedrosselt und so stromauf der Vorrichtung zur Drosselung des Abgasstroms ein Druckanstieg im Abgas erzeugt wird. Unter "stromauf" wird hierbei eine Strömungsrichtung des Abgases verstanden, die entgegengesetzt zur Strömungsrichtung des Abgases ist, wenn dieses den Motor über seine Auslassventile verlässt und in Richtung Drosselvorrichtung bzw. Abgasturbolader strömt.

### Stand der Technik

Als Motorbremsvorrichtung sei hier z.B. jene der EP 0736672 B1 in Verbindung mit einem hierdurch geschützten Verfahren zur Motorbremsung genannt. Bei diesem Verfahren wird die Motorbremsung derart vollzogen, dass die Abgasströmung gedrosselt und so stromauf der Drosselvorrichtung ein Druckanstieg im Abgas erzeugt wird, das nach einem Zwischenöffnen eines Auslassventiles in den Verbrennungsraum rückströmt und während des anschließenden Kompressionstaktes bei weiterhin teiloffengehaltenem Auslassventil für die Motorbremsung sorgt. Beim Motorbremsen wird hierbei in ein Zwischenöffnen des Auslassventiles, das bei in Drosselstellung befindlicher durch den im Abgas hervorgerufenen Druckanstieg bewirkt wird, steuerungstechnisch eingegriffen, in dem das nach Zwischenöffnung zum Schließen neigende Auslassventil zwangsweise durch eine nockenwellenfem in den Auslassventilbetätigungsmechanismus eingebaute Steuereinrichtung abgefangen am Schließen gehindert und dann längstens bis zur nockengesteuerten Auslassventilöffnung teilweise offen gehalten wird.

Bei diesem Motorbremsverfahren befinden sich während des Motorbremsbetriebes die im Abgasstrang angeordneten Drosselklappen in einer Drosselstellung, in der der zugehörige Abgasstrang nicht vollständig geschlossen ist, so dass die Drosselklappe durch einen randseitig offen bleibenden schmalen Spalt von einem Teil des aufgestauten Abgases passiert werden kann. Dieser Abgas-Schlupf ist notwendig, um ein Abwürgen des Abgasstromes und ein Überhitzen der Brennkraftmaschine bzw. des Motors zu verhindern.

Obgleich dieses bekannte Motorbremsverfahren hervorragende Bremsleistungen erbringt, ergibt sich für manche Anwendungsfälle der Wunsch nach einer Bremsleistungssteigerung während des Motorbremsbetriebes, um die im Fahrzeug vorhandenen weiteren Bremssysteme wie Retarder und Betriebsbremse stärker zu entlasten oder geringer dimensioniert darstellen zu können. Hierzu sind Zusatzmaßnahmen notwendig, mit denen es möglich wird, den Ladeluftdruck während des Motorbremsbetriebes anzuheben, so dass sich deutlich höhere Abgasgegendrücke einstellen.

Zur Erzielung einer solchen Ladeluftdruckerhöhung für eine Bremsleistungssteigerung sind bereits verschiedene Vorrichtungen und Methoden bekannt. Aus der EP 1 762 716 ist beispielsweise eine Anordnung zur Steuerung des Abgasstroms eines Motors bekannt, wobei zwischen den Auslassventilen und dem Turbolader eine Bypassleitung angeordnet ist, die einen Teil des Abgasstroms an der Drosseleinrichtung vorbeiführt und diesen auf das Turbinenrad des Turboladers leitet. Es kann somit eine hinreichende Luftmenge zur Beaufschlagung des Motors dann bereit gestellt werden, wenn der Turbolader auch bei geschlossener Bremsklappe eine hohe Drehzahl und damit ein entsprechendes Fördervolumen erreicht.

Aus der EP 1 801 392 ist eine Vorrichtung zur Steigerung der Bremsleistung einer mehrzylindrigen Brennkraftmaschine eines Fahrzeugs während des Motorbremsbetriebes bekannt, wobei jeder Abgassammelstrang durch eine Absperrklappe während des Motorbremsbetriebes vollständig absperrbar ist, vom absperrbaren Bereich jedes Abgassammelstranges eine Bypassleitung abzweigt, jede Bypassleitung mit einer Düsenbohrung kommuniziert, die in einer Turbinenwand der Abgasturbine ausgebildet ist, die beiden Düsenbohrungen in einer zur Achse des Turbinenrades senkrechten Ebene entweder parallel nebeneinander verlaufend und über je einen zum anderen benachbarten Austritt, oder in spitzem Winkel zueinander verlaufend sowie ineinander übergehend und dann über einen gemeinsamen Austritt tangential auf den Außenbereich des Turbinenrades gerichtet in die Turbinenkammer ausmünden.

Die vorstehend genannten Vorrichtungen und Methoden regeln die Motorbremsleistung über den Abgasgegendruck, was je nach Klappenstellung der Drosselvorrichtung zu einem weniger günstigem Ansprechverhalten des Bremssystems führen kann und weisen zur Düsenabschaltung aufwendige Schaltventile auf.

Ein Verfahren zur Regelung des Ladeluftmassenstroms einer aufgeladenen Brennkraftmaschine ist ferner aus der US 6,155,049 bekannt, bei der die Druckwerte des Ladedrucks und des Abgasgegendrucks gemessen und gegenübergestellt werden und ein Druckgefälle als Regelgröße für den Ladeluftmassenstrom herangezogen wird. Diese Druckgefälleregelung kann in Verbindung mit einer variablen Turbinengeometrie ferner zur Abbremsung der Brennkraftmaschine eingesetzt werden. Ein vom Prinzip her ähnlicher Aufbau ist ferner auch aus der EP 0831216 A2 bekannt.

Ausgehend hiervon besteht die Aufgabe der vorliegenden Erfindung darin, ein Verfahren und eine Vorrichtung zur Motorbremsung vorzusehen, welche mit geringerem Bauteil- und Kostenaufwand, sowie einer verbesserten Regelung eine gesteigerte Motorbremsleistung erbringen.

Zur Lösung dieser Aufgabe wird die in den Patentansprüchen 1und 22 angegebene Merkmalskombination vorgeschlagen. Vorteilhafte Ausgestaltungen und Weiterbildungen der Erfindung ergeben sich aus den abhängigen Ansprüchen.

### Offenbarung der Erfindung

Nach Maßgabe der vorliegenden Erfindung ist ein Verfahren zur Motorbremsung eines vorzugsweise nach dem Dieselprinzip arbeitenden mehrzylindrigen Motors vorgesehen. Der Motor weist hierbei zumindest einen von einem Abgasstrom beaufschlagten Abgasturbolader mit einer Abgasturbine und einem Ladeluftverdichter, die auf einer gemeinsamen Welle angeordnet sind, auf. Bei Vorhandensein einer Mehrzahl von Abgasturboladern ist vorzugsweise zumindest ein Hochdruckstufe und eine Niederdruckstufe vorgesehen. Der Motor weist ferner zumindest einen Abgaskrümmer, der den Abgasstrom von Auslassventilen des Motors zum Abgasturbolader leitet, und zumindest eine zwischen den Auslassventilen und dem Abgasturbolader angeordnete Vorrichtung zur Drosselung des Abgasstroms auf, sowie zumindest eine Bypassleitung zum Vorbeiführen des Abgasstroms an der Vorrichtung zur Drosselung des Abgasstroms, wobei der Abgasstrom durch die zumindest eine Bypassleitung auf zumindest ein Turbinenrad der Abgasturbine geleitet wird, der Abgasstrom gedrosselt und so stromauf der Vorrichtung zur Drosselung des Abgasstroms ein Druckanstieg im Abgas erzeugt wird.

Entsprechend dem Verfahren erfolgt des Weiteren eine Messung eines Abgasgegendrucks, sowie eines Ladeluftdrucks. Basierend auf der Messung des Abgasgegendrucks und des Ladeluftdrucks kann eine Ermittlung einer optimalen Stellung der Vorrichtung zur Drosselung des Abgasstroms zum Erzielen einer vorbestimmten Bremsleistung durchgeführt werden. Mit anderen Worten kann eine Stellung der Vorrichtung zur Drosselung des Abgasstroms zum Erzielen einer vorbestimmten Stellung ermittelt werden.

Anschließend erfolgt eine Regelung des Abgasgegendrucks sowie des Ladeluftdrucks durch Einstellen der Vorrichtung zur Drosselung des Abgasstroms entsprechend der Ermittlung der optimalen Stellung der Vorrichtung zur Drosselung des Abgasstroms bzw. entsprechend der ermittelten Stellung der Vorrichtung zur Drosselung des Abgasstroms.

Dies ermöglicht im Gegensatz zu einer Regelung basierend auf nur dem Abgasgegendruck als Regelgröße eine Erzielung eines höheren Abgasgegendrucks über den gesamten Drehzahlbereich des Motors. Der vom Abgasturbolader erzeugte Ladeluftdruck hat einen wesentlichen Einfluss auf den Abgasgegendruck. Die Einbeziehung des Ladeluftdrucks in die Regelung des Abgasgegendrucks ermöglicht daher einen schnelleren Anstieg des Abgasgegendrucks und somit eine verbesserte Motorbremsleistung.

Die optimale Stellung der Vorrichtung zur Drosselung des Abgasstroms ist in einem ersten Drehzahlbereich des Motors vorzugsweise eine Schließstellung, in welcher der Querschnitt eines Abgassystems blockiert wird und der Abgasstrom durch die zumindest eine Bypassleitung an der Vorrichtung zur Drosselung des Abgasstroms vorbeigeführt wird. Alternativ kann die optimale Stellung der Vorrichtung zur Drosselung des Abgasstroms in einem ersten Drehzahlbereich des Motors ebenfalls eine Schließstellung sein, in welcher zumindest ein Teil des Querschnitts des Abgassystems freigegeben wird und zumindest ein Teil des Abgasstroms durch die zumindest eine Bypassleitung an der Vorrichtung zur Drosselung des Abgasstroms vorbeigeführt wird.

Gemäß einem weiteren Aspekt der vorliegenden Erfindung ist die optimale Stellung der Vorrichtung zur Drosselung des Abgasstroms in einem zweiten Drehzahlbereich des Motors eine Schließstellung, in welcher zumindest ein Teil des Querschnitts des Abgassystems freigegeben wird und ein Teil des Abgasstroms durch die zumindest eine Bypassleitung an der Vorrichtung zur Drosselung des Abgasstroms vorbeigeführt wird.

Die Bypassleitung weist einen geringeren Querschnitt als das Abgassystem auf, so dass ein vorbestimmt begrenzter Abgasstrom mit hoher Geschwindigkeit und somit hohem Impuls auf das Turbinenrad der Abgasturbine geleitet wird. Hierdurch wird erreicht, dass der Abgasturbolader trotz relativ geringer Antriebsluftmenge auf eine hohe Drehzahl gebracht wird und damit verdichterseitig die gewünschte Luftmenge zur Verfügung stellt, wobei die Vorrichtung zur Drosselung des Abgasstroms vorzugsweise in einer Schließstellung ist, in welcher der Querschnitt eines Abgassystems durch die Vorrichtung zur Drosselung des Abgasstroms geschlossen oder fast geschlossen wird und der Motor eine geringe Drehzahl, vorzugsweise unter 1400 Umdrehungen pro Minute aufweist. Insbesondere lässt sich damit erreichen, dass die Motorbremse bei bereits geringen Drehzahlen einsetzt. Demnach kann der erste Drehzahlbereich des Motors ein Drehzahlbereich kleiner gleich 1400 Umdrehungen pro Minute sein.

In einem zweiten Drehzahlbereich des Motors ist die optimale Stellung der Vorrichtung zur Drosselung des Abgasstroms vorzugsweise eine Schließstellung, in welcher zumindest ein Teil des Querschnitts des Abgassystems freigegeben wird und ein Teil des Abgasstroms durch die Bypassleitung an der Vorrichtung zur Drosselung des Abgasstroms vorbeigeführt wird. Der zweite Drehzahlbereich des Motors ist dabei vorzugsweise ein Drehzahlbereich größer als 1400 Umdrehungen pro Minute bis zu einer Höchstdrehzahl des Motors. Bei einer mittleren und/oder hohen Drehzahl des Motors kann der Abgasgegendruck, sowie Ladeluftdruck daher vorwiegend durch die Vorrichtung zur Drosselung des Abgasstroms geregelt werden.

Zur Erzielung einer maximalen Bremsleistung bei einer jeweiligen Motordrehzahl wird vorzugsweise zuerst ein maximaler Ladeluftdruck eingeregelt und nach Erreichen des für die Motordrehzahl maximalen Ladeluftdrucks erfolgt eine Regelung des maximalen Abgasgegendrucks. Je nach Motordrehzahl kann somit im Vergleich zu herkömmlichen Regelungen ein größerer Kanalquerschnitt der Vorrichtung zur Drosselung des Abgasstroms freigegeben werden.

Zumindest eine Stellung der Vorrichtung zur Drosselung des Abgasstroms entspricht einem bestimmten Abgasgegendruck. Vorzugsweise erfolgt eine Erkennung einer richtigen Stellung der Vorrichtung zur Drosselung des Abgasstroms durch eine Regeleinrichtung aus einem Vergleich des aktuellen Ladeluftdrucks mit einem Sollladeluftdruck bei dem aktuellen Abgasgegendruck. Die Regeleinrichtung kann beispielsweise ein Motor- oder Fahrzeugsteuergerät sein.

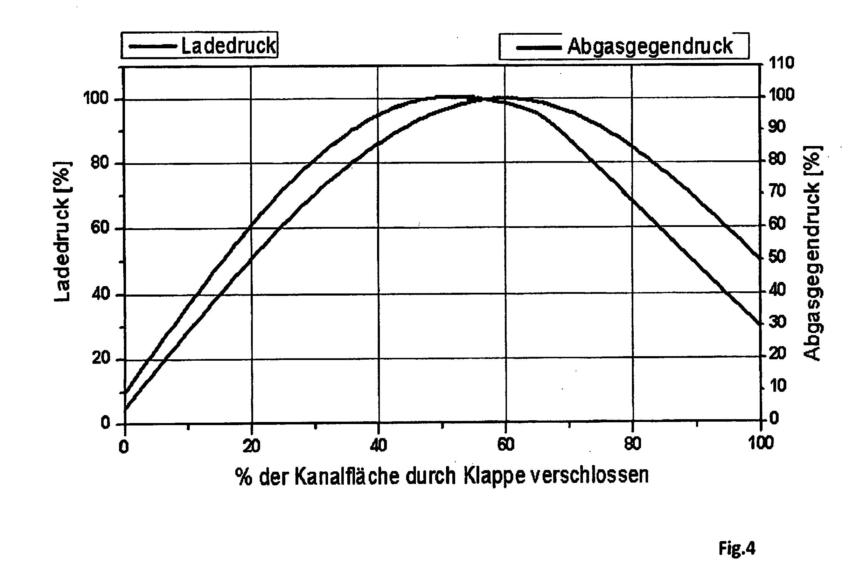

Bezugnehmend auf Fig. 4 ergibt sich somit ein besseres Ansprechverhalten im Motorbremsbetrieb. Ist beispielsweise 90% der Kanalfläche der Vorrichtung zur Drosselung des Abgasstroms verschlossen beträgt der Abgasgegendruck ca. 65% des maximal erreichbaren Werts. Soll die Motorbremsleistung nun auf null reduziert werden, muss die Vorrichtung zur Drosselung des Abgasstroms geöffnet werden. Wird die Vorrichtung zur Drosselung des Abgasstroms jedoch weiter geöffnet, kommt es zunächst zu einem Anstieg des Abgasgegendrucks aufgrund des durch den erhöhten Gasdurchsatz bedingten höheren Ladeluftdrucks. Der Abgasgegendruck nimmt also erst zu bevor es zu einem Abfall kommen kann, was ein schlechtes Ansprechverhalten der Motorbremse zur Folge hätte. Ein Abgasgegendruck von ca. 65% liegt jedoch ebenfalls bei einer Schließung von nur 30% der Kanalfläche der Vorrichtung zur Drosselung des Abgasstroms an. Entsprechend dem erfindungsgemäßen Verfahren erfolgt daher eine Erkennung einer richtigen Stellung der Vorrichtung zur Drosselung des Abgasstroms aus einem Vergleich des aktuellen Ladeluftdrucks mit einem Sollladeluftdruck bei dem aktuellen Abgasgegendruck, wodurch ein verbessertes Ansprechverhalten im Motorbremsbetrieb erreicht wird.

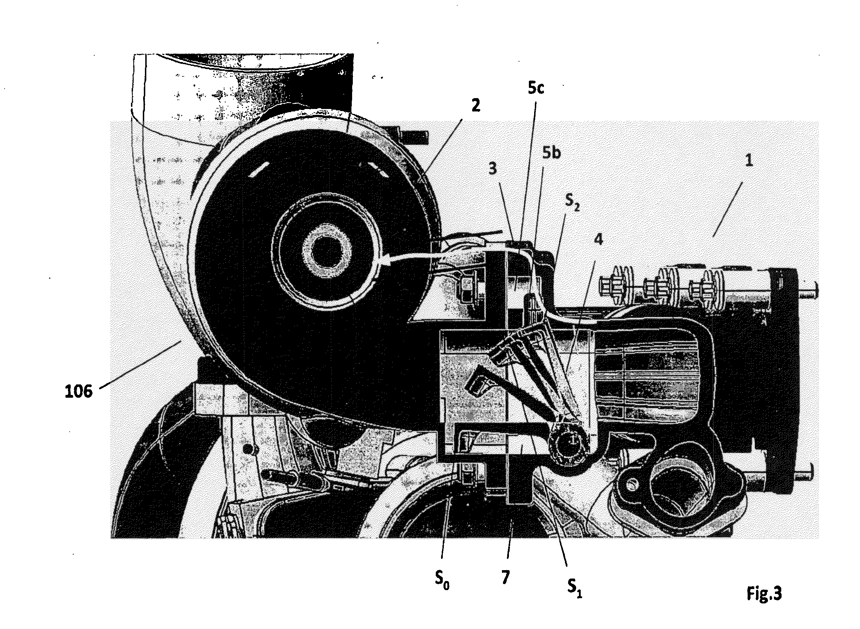

Falls der aktuelle Abgasgegendruck geringer ist als ein gewünschter Abgasgegendruck und falls der Ladeluftdruck einem vorbestimmten Wert entspricht, kann die Stellung der Vorrichtung zur Drosselung des Abgasstroms weiter geschlossen werden. Bezugnehmend auf Fig. 3 kann der vorbestimmte Wert beispielsweise dadurch gegeben sein, dass der prozentuale Ladeluftdruck größer oder gleich dem prozentualen Abgasgegendruck ist. Falls der aktuelle Abgasgegendruck geringer ist als ein gewünschter Abgasgegendruck und falls der Ladeluftdruck kleiner als ein vorbestimmter Wert ist, kann die Stellung der Vorrichtung zur Drosselung des Abgasstroms weiter geöffnet werden.

In einem Drehzahlbereich von 0 bis 1000 Umdrehungen pro Minute des Motors wird die Vorrichtung zur Drosselung des Abgasstroms vorzugsweise in eine Schließstellung gestellt, in welcher sowohl der Querschnitt des Abgassystems als auch die zumindest eine Bypassleitung blockiert werden. Die zumindest eine Bypassleitung kann dabei durch ein Schwenken der Vorrichtung zur Drosselung des Abgasstroms verschlossen werden.

Gemäß einem weiteren Aspekt erfolgt die Regelung des Abgasgegendrucks sowie des Ladeluftdrucks zusätzlich zur Regelung durch die Vorrichtung zur Drosselung des Abgasstroms durch eine Einrichtung zur Ladedruckregelung.

Gemäß einem weiteren Aspekt der vorliegenden Erfindung ist die Einrichtung zur Ladedruckregelung durch wenigstens ein Waste Gate gebildet, welches die Abgasturbine umgeht.

Nach Maßgabe der vorliegenden Erfindung ist des Weiteren eine Vorrichtung zur Motorbremsung eines vorzugsweise nach dem Dieselprinzip arbeitenden Motors vorgesehen, der zumindest einen von einem Abgasstrom beaufschlagten Abgasturbolader mit einer Abgasturbine und einem Ladeluftverdichter, die auf einer gemeinsamen Welle angeordnet sind, aufweist, mit einem Abgaskrümmer, der den Abgasstrom von Auslassventilen des Motors zu dem zumindest einen Abgasturbolader leitet, und mit einer zwischen den Auslassventilen und dem Abgasturbolader angeordneten Vorrichtung zur Drosselung des Abgasstroms, sowie zumindest einer Bypassleitung zum Vorbeiführen des Abgasstroms an der Vorrichtung zur Drosselung des Abgasstroms, wobei der Abgasstrom durch die zumindest eine Bypassleitung auf ein Turbinenrad der Abgasturbine geleitet wird, der Abgasstrom gedrosselt und so stromauf der Vorrichtung zur Drosselung des Abgasstroms ein Druckanstieg im Abgas erzeugt wird, sowie Mittel zur Messung eines Abgasgegendrucks, sowie eines Ladeluftdrucks vorgesehen sind.

Des Weiteren ist eine Steuereinrichtung vorgesehen, welche sich eignet, basierend auf der Messung des Abgasgegendrucks und des Ladeluftdrucks eine Stellung der Vorrichtung zur Drosselung des Abgasstroms zum Erzielen einer vorbestimmten Bremsleistung zu ermitteln. Die Steuereinrichtung führt anschließend eine Regelung des Abgasgegendrucks sowie des Ladeluftdrucks durch die Vorrichtung zur Drosselung des Abgasstroms entsprechend der ermittelten Stellung der Vorrichtung zur Drosselung des Abgasstroms durch.

Die Vorrichtung zur Drosselung des Abgasstroms weist vorzugsweise eine erste Schließstellung auf, in welcher der Querschnitt eines Abgassystems blockiert ist, der Abgasstrom jedoch durch die zumindest eine Bypassleitung an der Vorrichtung zur Drosselung des Abgasstroms vorbeigeführt wird, sowie eine zweite Schließstellung, in welcher der Querschnitt des Abgassystems und die zumindest eine Bypassleitung blockiert sind. Aufgrund dessen, dass die Bypassleitung durch die Vorrichtung zur Drosselung des Abgasstroms verschließbar ist, entfallen die bei herkömmlichen Drosselvorrichtungen verwendeten aufwendigen Schaltventile.

Gemäß einem weiteren Aspekt der vorliegenden Erfindung erfolgt die die Regelung des Abgasgegendrucks sowie des Ladeluftdrucks zusätzlich zur Regelung durch die Vorrichtung zur Drosselung des Abgasstroms durch eine Einrichtung zur Ladedruckregelung.

Gemäß einem weiteren Aspekt der vorliegenden Erfindung ist die Einrichtung zur Ladedruckregelung durch wenigstens ein Waste Gate gebildet, welches insbesondere die Abgasturbine umgeht.

Entsprechend einem weiteren Gedanken der vorliegenden Erfindung ist vorgesehen, dass der Motor je Zylinder wenigstens ein an ein Auslasssystem angeschlossenes Auslassventil aufweist, in welches Auslasssystem eine Drosselvorrichtung eingebaut ist, die zur Motorbremsung so betätigt wird, dass die Abgasströmung gedrosselt und so stromauf der Drosselvorrichtung ein Druckanstieg im Abgas erzeugt wird, das nach einem Zwischenöffnen des Auslassventils in den Verbrennungsraum rückströmt und während des anschliessenden Kompressionstaktes bei weiterhin teiloffengehaltenem Auslassventil für eine erhöhte Motorbremsleistung sorgt, wobei beim Motorbremsen in ein Zwischenöffnen des Auslassventils, das bei in Drosselstellung befindlicher Drosselvorrichtung durch den im Abgas hervorgerufenen Druckanstieg bewirkt wird, steuerungstechnisch eingegriffen wird, in dem das nach Zwischenöffnung zum Schließen neigende Auslassventil zwangsweise durch eine nockenwellenfern in den Auslassventilbetätigungsmechanismus eingebaute Steuereinrichtung abgefangen am Schließen gehindert und dann längstens bis zur nockengesteuerten Auslassventilöffnung teilweise offen gehalten wird, wobei der Motor ferner zumindest einen von einem Abgasstrom beaufschlagten Abgasturbolader mit einer Abgasturbine und einem Ladeluftverdichter, die auf einer gemeinsamen Welle angeordnet sind, aufweist, mit einem Abgaskrümmer, der den Abgasstrom von Auslassventilen des Motors zum Abgasturbolader leitet, und mit einer zwischen den Auslassventilen und dem Abgasturbolader angeordneten Vorrichtung zur Drosselung des Abgasstroms, sowie zumindest einer Bypassleitung zum Vorbeiführen des Abgasstroms an der Vorrichtung zur Drosselung des Abgasstroms, wobei der Abgasstrom durch die zumindest eine Bypassleitung auf zumindest ein Turbinenrad der Abgasturbine geleitet wird, der Abgasstrom gedrosselt und so stromauf der Vorrichtung zur Drosselung des Abgasstroms ein Druckanstieg im Abgas erzeugt wird, eine Messung eines Abgasgegendrucks, sowie eines Ladeluftdrucks erfolgt, wobei basierend auf der Messung des Abgasgegendrucks und des Ladeluftdrucks eine Stellung der Vorrichtung zur Drosselung des Abgasstroms zum Erzielen einer vorbestimmten Bremsleistung ermittelt wird und eine Regelung des Abgasgegendrucks sowie des Ladeluftdrucks durch die Vorrichtung zur Drosselung des Abgasstroms entsprechend der ermittelten Stellung der Vorrichtung zur Drosselung des Abgasstroms erfolgt.

Gemäß einem weiteren Aspekt der vorliegenden Erfindung wird am Ende des Expansionstaktes, wenn die nockenwellenseitige Steuerung des Auslassventils wieder wirksam wird, die Haltefunktion der vorher als hydraulisch gesperrter Puffer wirkenden Steuereinrichtung aufgehoben und dann die Öffnung des Auslassventils bis zu dessen vollem Hub, dessen Halten und Wiederschließen während des Ausschubtaktes durch den zugehörigen normalen Auslassventilsteuernocken über den Auslassventilbetätigungsmechanismus mit der dann darin nur noch als mechanischer Puffer wirkenden Steuereinrichtung (50) gesteuert.

Gemäß einem anderen Aspekt der vorliegenden Erfindung ist die Steuereinrichtung in einem zylinderkopfseitig gelagerten Kipphebel eingebaut wirksam und weist einen in einer Bohrung des Kipphebels leckagearm axial zwischen zwei mechanisch durch Anschläge begrenzten Endstellungen beweglichen, vorn auf die hintere Stirnfläche des Auslassventilschaftes wirkenden und rückseitig durch eine Druckfeder sowie hydraulisch beaufschlagten Steuerkolben und einer in einen Gewindeabschnitt der selben Kipphebelbohrung eingeschraubten Steuerbuchse auf, in deren nach vorn zum Steuerkolben hin offenem Druckraum die den Steuerkolben beaufschlagende Druckfeder sowie ein nur die Einleitung von Druckmittel aus einem Druckmittelzufuhrkanal zulassendes Rückschlagventil mit einem druckfederbelasteten Schließorgan eingebaut sind. Der Druckmittelzufuhrkanal wird über einen kipphebelinternen Speisekanal mit Druckmittel versorgt, wobei vom Druckraum aus durch die Steuerbuchse zu deren oberem Ende ein Entlastungskanal führt, dessen Austrittsöffnung während eines Bremsvorganges in der Abfang- und Haltephase der Steuervorrichtung zwecks Aufbau und Halten des Druckmitteldruckes im Druckraum und eines damit einhergehenden Ausfahrens und Halten des Steuerkolbens in ausgefahrener Auslassventil-Abfangposition durch einen zylinderdeckelfest angeordneten Anschlag verschlossen gehalten wird.

Gemäß einem weiteren Aspekt der vorliegenden Erfindung wird während eines Bremsvorganges beim abgasgegendruckbedingten Zwischenöffnen des Auslassventils der Steuerkolben aufgrund der im Druckraum wirkenden Kräfte - dem Auslassventilschaft folgend - in seine ausgefahrene Endposition ausgeschoben und damit einhergehend der sich volumenmä-βig vergrößernde Druckraum mit Druckmittel aufgefüllt, somit der Steuerkolben anschließend hydraulisch in Auslassventil-Abfangposition verblockt ist und in dieser das sich in Schließrichtung bewegende Auslassventil mit seiner Stirnfläche abfängt und entsprechend offen hält.

Gemäß einem weiteren Aspekt der vorliegenden Erfindung erfolgt die Rückführung des Steuerkolbens aus seiner Auslassventil-Abfangposition in seine eingefahrene Grundstellung am Ende der Haltephase in der Weise, dass bei nockenwellenseitig mit dem normalen Auslassnocken direkt oder indirekt über eine Stößelstange erfolgender Betätigung des Kipphebels durch dessen Wegschwenken vom zylinderdeckelseitigen Anschlag die Austrittsöffnung des steuerbuchseninternen Entlastungskanals am oberen Ende der Steuerbuchse freigegeben wird, somit das im Druckraum befindliche Druckmittel druckentlastet und vom nun nachrückfähigen, nicht mehr mit dem Kipphebel verblockten Steuerkolben volumenentlastet wird, solange, bis dieser seine vollständig eingefahrene Grundstellung eingenommen hat.

Gemäß einem weiteren Aspekt der vorliegenden Erfindung ist - unter Anwendung bei einem Verbrennungsmotor mit untenliegender Nockenwelle, von der aus die Betätigung eines Auslassventils über eine Stößelstange und einen nachfolgenden Kipphebel erfolgt - die Steuereinrichtung im Raum zwischen Stößelstange und Krafteinleitorgan des Kipphebels in einer im bzw. am Zylinderkopf angeordneten Aufnahmehülse wirksam und weist eine in der Aufnahmehülse leckagearm koaxial verschiebbare, unten am oberen Ende der Stößelstange abgestützte Steuerhülse sowie einen in einer Sacklochbohrung der Steuerhülse leckagearm koaxial verschiebbar eingebauten Steuerkolben auf, der oben an einem gelenkig mit dem Krafteinleitorgan des Kipphebels verbundenen Schubübertragungsteil abgestützt und unten von einer in Richtung des letzteren wirkenden Druckfeder beaufschlagt ist, die in dem unterhalb des Steuerkolbens gegebenen Teil der Sacklochbohrung und solchermaßen begrenzten hydraulischen Druckraum eingebaut ist, der über einen zylinderkopf- bzw. bockinternen Speisekanal sowie einen aufnahmehülseninternen Speisekanal und einen mit diesem kommunizierenden steuerhülseninternen Zufuhrkanal mit Druckmittel, insbesondere Motoröl, versorgt ist, wobei ein in den Druckraum eingebautes Rückschlagventil mit seinem federbelasteten Schließorgan ein Rückströmen von Druckmittel aus dem Druckraum in den Zufuhrkanal verhindert.

Gemäß einem weiteren Aspekt der vorliegenden Erfindung wird während eines Bremsvorganges beim abgasgegendruckbedingten Zwischenöffnen des Auslassventils der Steuerkolben aufgrund der im Druckraum wirkenden Kräfte ausgefahren und dabei der Kipphebel nachgeführt, wobei beim Ausfahren des Steuerkolbens nach einem auf den Aufspringhub des Auslassventils abgestimmten Hubweg die Austrittsöffnung eines steuerkolbeninternen Entlastungskanals durch Austauchen aus der steuerhülsenseitigen Sacklochbohrung freigegeben und über diesen Entlastungskanal das druckrauminterne Druckmittel druckentlastet wird und dass zu Beginn der anschließenden Schließbewegung des Auslassventils über den entsprechend nachgeführten Kipphebel und das Schubübertragungsteil der Steuerkolben wieder in Richtung seiner unausgefahrenen Grundstellung verschoben wird, solange, bis die Austrittsöffnung des Entlastungskanals durch die Wand der Sacklochbohrung wieder verschlossen ist, wodurch der Druckraum wieder abgesperrt, damit die Steuereinrichtung hydraulisch blockiert und das Auslassventil in der entsprechenden Teilöffnungsstellung abgefangen gehalten bleibt.

Gemäß einem weiteren Aspekt der vorliegenden Erfindung erfolgt die Aufhebung der hydraulischen Verblockung des Steuerkolbens in der Steuerhülse und dessen Rückführung aus Auslassventil-Abfangposition in seine unausgefahrene Grundstellung dann, wenn bei nokkenwellenseitig mit dem normalen Auslassnocken erfolgender Betätigung der Stößelstange und damit einhergehendem Hub der Steuerhülse nach einem bestimmten, auf den Maximal-Öffnungshub des Auslassventils abgestimmten Hub der Steuerhülse durch deren Austauchen aus der Aufnahmebohrung der Aufnahmehülse der Austrittsquerschnitt einer vom Druckraum quer abgehenden Entlastungsbohrung freigegeben wird, somit das im Druckraum befindliche Druckmittel druckentlastet und vom nun nachrückfähigen Steuerkolben volumenentlastet wird, solange, bis dieser seine vollständig eingefahrene Grundstellung eingenommen hat, welche bei Aufsitzen des Schubübertragungsteiles an der Stirnseite der Steuerhülse gegeben ist.

Gemäß einem weiteren Aspekt der vorliegenden Erfindung wird das Auslassventil nach abgasgegendruckbewirktem Zwischenöffnen in einer Abfangposition gehalten, deren Abstand zur Schließposition etwa 1/5 bis 1/20 des vollen nockenwellengesteuerten Auslassventil-Öffnungshubes beträgt.

Gemäß einem weiteren Aspekt der vorliegenden Erfindung wird die Steuereinrichtung auch als hydraulisches Ventilspielausgleichsorgan herangezogen, wobei ein im Ventilbetätigungsmechanismus auftretendes Spiel durch entsprechende Druckmittelnachfüllung in den Druckraum mit entsprechender Nachführung des Steuerkolbens in Richtung des zu beaufschlagenden Organs ausgeglichen wird.

Es ist im Weiteren selbstverständlich, dass die offenbarten Merkmale der Erfindung zur Erzielung weiterer Vorteile und Ausführungen beliebig miteinander kombiniert werden können.

Weitere Eigenschaften und Vorteile der Erfindung ergeben sich aus der folgenden Beschreibung von Ausführungsformen der Erfindung, unter Bezugsnahme auf die beigefügten Figuren. Die beschriebenen Ausführungsbeispiele bzw. Ausführungsformen sind rein beispielhaft und in keinster Weise beschränkend zu verstehen.

### Kurze Beschreibung der Zeichnungen

Es zeigen:
- Fig.1: ein Ablaufdiagramm eines Beispiels des erfindungsgemäßen Verfahrens zur Motorbremsung;
- Fig. 2: eine Darstellung eines Beispiels eines Abgasstranges einer erfindungsgemäßen Vorrichtung zur Motorbremsung;
- Fig. 3: ein Funktionsschema der erfindungsgemäßen Vorrichtung zur Drosselung des Abgasstroms;
- Fig. 4: ein Diagramm eines Verlaufs von Ladeluftdruck und Abgasgegendruck im Verhältnis zur Stellung der Vorrichtung zur Drosselung des Abgasstroms;
- Fig. 5: ein Diagramm, aus dem der Hubverlauf eines Auslassventils während des Bremsbetriebes bei Anwendung des Bremsverfahrens entsprechend einer weiteren Ausführungsform der Erfindung hervorgeht;
- Fig. 6: ein Diagramm, aus dem der Hubverlauf eines Auslassventils bei einem aus der DE 39 22 884 C2 bekannten Bremsverfahren hervorgeht;
- Fig. 7A-7D: jeweils einen Ausschnitt aus einem Auslassventilbetätigungsmechanismus mit einer weiteren Ausführungsform einer erfindungsgemäßen Steuereinrichtung in einer Betriebsstellung während des erfindungsgemäßen Bremsbetriebes; und
- Fig. 8: ein Funktionsschema der erfindungsgemäßen Vorrichtung zur Drosselung des Abgasstroms mit einer Einrichtung zur Ladedruckregelung.

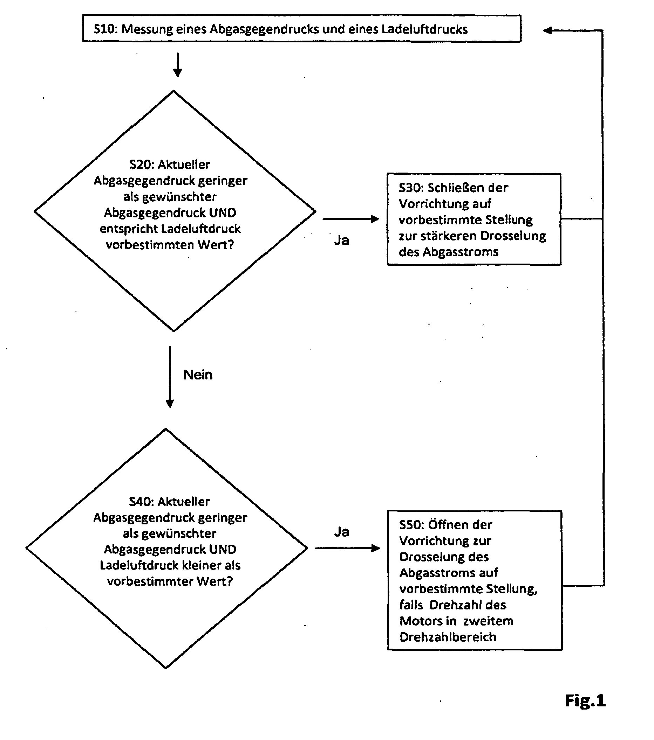

Fig. 1 zeigt ein Ablaufdiagramm eines Beispiels des erfindungsgemäßen Verfahrens zur Motorbremsung. Unter weiterer Bezugnahme auf Fig. 9 erfolgt in Schritt S10 zunächst eine Messung eines Abgasgegendrucks und eines Ladeluftdrucks. Die Messung des statischen und/oder dynamischen Drucks der Ladeluft erfolgt beispielsweise mittels zumindest eines Drucksensors P bekannter Bauart, welcher im Bereich zwischen dem Motor M bzw. den Zylindern 101 und dem Ladeluftverdichter 105 angeordnet ist. Die Messung des statischen und/oder dynamischen Drucks des Abgases erfolgt beispielsweise mittels zumindest eines Drucksensors P bekannter Bauart, welcher im Bereich zwischen dem Motor M bzw. den Auslassventilen 102 der Zylinder 101 des Motors M und der Vorrichtung 4 zur Drosselung des Abgasstroms und/oder im Bereich zwischen der Vorrichtung 4 zur Drosselung des Abgasstroms und der Abgasturbine 106 angeordnet ist.

In Schritt S20 wird bestimmt, ob der gemessene, d.h. aktuelle Abgasgegendruck geringer als ein gewünschter Abgasgegendruck ist und ein Ladeluftdruck einem vorbestimmten Wert entspricht. Bei einer positiven Bestimmung erfolgt in Schritt S30 ein Schließen einer Vorrichtung 4 zur Drosselung eines Abgasstroms in eine vorbestimmte Stellung, wobei auch bei einem vollständigen Schließen der Vorrichtung 4 zur Drosselung des Abgasstroms durch den mittels Bypassleitungen 5a, 5b an der Vorrichtung 4 zur Drosselung des Abgasstroms vorbeigeführten Abgasstrom, welcher auf zumindest ein Turbinenrad eines Abgasturboladers 106 geleitet wird, ein Ladeluftdruck erzeugt wird, da die Abgasturbine 106 mechanisch mit dem Ladeluftverdichter 105 verbunden ist.

Bei einer negativen Feststellung wird in Schritt S40 ferner bestimmt, ob der gemessene, d.h. aktuelle Abgasgegendruck geringer als ein gewünschter Abgasgegendruck ist und ein Ladeluftdruck kleiner als ein vorbestimmter Wert ist.

Bei einer positiven Bestimmung erfolgt in Schritt S50 ein Öffnen der Vorrichtung 4 zur Drosselung des Abgasstroms in eine vorbestimmte Stellung, sofern die Drehzahl des Motors M in einem zweiten Drehzahlbereich liegt, welcher größer gleich beispielsweise 1400 Umdrehungen pro Minute ist. Falls die Drehzahl des Motors M in einem ersten Drehzahlbereich liegt, welcher beispielsweise kleiner als 1400 Umdrehungen pro Minute ist, ist die Vorrichtung 4 zur Drosselung des Abgasstroms in einer ersten Schließstellung, in der der Querschnitt eines Abgassystems blockiert wird und der Abgasstrom durch die Bypassleitungen 5a, 5b an der Vorrichtung 4 zur Drosselung des Abgasstroms vorbeigeführt wird. Die Vorrichtung 4 zur Drosselung des Abgasstroms wird erst dann geöffnet, wenn die Drehzahl des Motors M den ersten Drehzahlbereich überschreitet.

In Schritt S30 und S50 erfolgt somit eine Regelung des Abgasgegendrucks und des Ladeluftdrucks durch Verwenden der Bypassleitungen 5 zum Vorbeiführen des Abgasstroms an der Vorrichtung 4 zur Drosselung des Abgasstroms und/oder Einstellen der Vorrichtung 4 zur Drosselung des Abgasstroms entsprechend einer Bestimmung der optimalen Stellung der Vorrichtung 4 zur Drosselung des Abgasstroms.

Zusätzlich zur Messung des Abgasgegendrucks und des Ladeluftdrucks kann auch die Stellung der Vorrichtung 4 zur Drosselung des Abgasstroms direkt mittels Sensoren bekannter Bauart gemessen werden. Dies würde die Regelung zusätzlich verbessern und es könnte dann effizienter auf vorgegebene Stellungen der Drosselvorrichtung 4 zur Drosselung des Abgasstroms eingestellt werden.

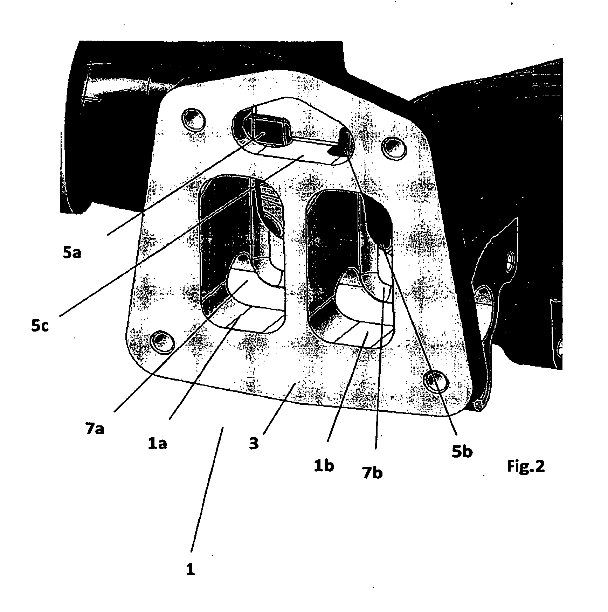

Fig. 2 zeigt eine Darstellung eines Beispiels eines Abgasstranges 1 einer erfindungsgemä-βen Vorrichtung zur Motorbremsung. Der Abgasstrang 1 besteht aus einem ersten Abgassammelstrang 1 a und einem zweiten Abgassammelstrang 1 b und weist auf dessen Stirnseite einen Flansch 3 zur Befestigung an einem Abgasturbolader 106 (siehe Fig. 9) auf.

Der erste Abgassammelstrang 1a weist eine erste Bypassleitung 5a auf, die durch einen kurzen Stichkanal aus dem Abgassammelstrang 1a versorgt wird. Der erste Abgassammelstrang 1a weist des Weiteren eine Aussparung 7a zur Aufnahme einer Vorrichtung 4 zur Drosselung eines Abgasstroms auf. Der zweite Abgassammelstrang 1b weist eine zweite Bypassleitung 5b auf, die durch einen kurzen Stichkanal aus dem Abgassammelstrang 1b versorgt wird. Der zweite Abgassammelstrang 1b weist des Weiteren eine Aussparung 7b zur Aufnahme der Vorrichtung 4 zur Drosselung des Abgasstroms auf.

Die erste Bypassleitung 5a und die zweite Bypassleitung 5b münden in eine gemeinsame Bypassleitung 5c, welche mit einer Düsenbohrung 6 des Abgasturboladers (siehe *Fig. 9*) kommuniziert.

Fig. 3 zeigt ein Funktionsschema der Vorrichtung 4 zur Drosselung des Abgasstroms entsprechend einer bevorzugten Ausführungsform der vorliegenden Erfindung. Der Abgasstrang 1 eines vorzugsweise nach dem Dieselprinzip arbeitenden Motors M ist an einem Turbinenradgehäuse 2 der Abgasturbine 106 (siehe auch Fig. 9) mittels eines Flanschs 3 befestigt. Die Darstellung zeigt insbesondere einen Querschnitt durch den Abgassammelstrang 1 b aus Fig. 2. Der den Abgasstrang 1 passierende Abgasstrom beaufschlagt das Turbinenrad (nicht dargestellt) der Abgasturbine 106 des Abgasturboladers. Jeder der Abgassammelstränge 1a, 1 b weist die Vorrichtung 4 zur Drosselung des Abgasstroms auf, die zwischen dem Motor M und dem Turbinenrad des Abgasturboladers angeordnet ist. Erfindungsgemäß zweigt von jedem Abgassammelstrang 1a, 1b eine Bypassleitung 5a, 5b ab, die mit der Düsenbohrung 6 in dem Turbinenradgehäuse 2 (siehe Fig. 9) kommuniziert.

Die Vorrichtung 4 zur Drosselung des Abgasstroms ist durch eine schwenkbare Klappe bzw. zwei schwenkbare Klappen gebildet und ist in einer Aussparung 7a, 7b des jeweiligen Abgassammelstranges 1a, 1b ausgebildet (siehe Fig. 2). Alternativ kann die Vorrichtung 4 zur Drosselung des Abgasstroms an Stelle zumindest einer schwenkbaren Klappe jedoch ebenfalls durch zumindest ein Tellerventil, zumindest einen Schieber, zumindest einen Drehschieber, oder ähnliches ausgebildet sein.

Die Vorrichtung 4 zur Drosselung des Abgasstroms kann zwischen einer Öffnungs- und zwei Schließstellungen stufenlos bewegt werden. In der Öffnungsstellung S₀ gibt die Vorrichtung 4 zur Drosselung des Abgasstroms den vollen Querschnitt des jeweiligen Abgassammefstranges 1a, 1b frei. In einer ersten Schließstellung S₁ blockiert die Vorrichtung 4 zur Drosselung des Abgasstroms den vollen Querschnitt des jeweiligen Abgassammelstranges 1a, 1b, jedoch ist die Bypassleitung 5a, 5b frei. Wird die Vorrichtung 4 zur Drosselung des Abgasstroms weiter in eine zweite Schließstellung S₂ geschlossen, blockiert sie sowohl den jeweiligen Abgassammelstrang 1 a, 1b, als auch die Bypassleitung 5a, 5b.

Bei teilweise geschlossener Vorrichtung 4 zur Drosselung des Abgasstroms, d.h. bei einer Klappenstellung zwischen der Öffnungsstellung S₀ und der ersten Schließstellung S₁, wird die über der Vorrichtung 4 zur Drosselung des Abgasstroms angeordnete Bypassleitung 5a, 5b von dem Abgasstrom beaufschlagt und leitet diesen durch die gemeinsame Bypassleitung 5c auf das Turbinenrad über die in dem Turbinenradgehäuse 1 integrierte Düsenbohrung 6. Der Querschnitt der Bypassleitung 5a, 5b ist wesentlich geringer als der Querschnitt des Abgassammelstranges 1a, 1b, so dass bei teilweise geschlossener Vorrichtung 4 zur Drosselung des Abgasstroms ein verhältnismäßig geringer Anteil des Abgasstroms durch die Bypassleitung 5a, 5b geleitet wird.

Ist die Vorrichtung 4 zur Drosselung des Abgasstroms in der ersten Schließstellung S₁, stellt die Bypassleitung 5a, 5b jedoch den einzigen Strömungspfad des Abgases zum Turbinenrad dar. Auf Grund des geringen Querschnitts der Bypassleitung 5a, 5b bzw. der gemeinsamen Bypassleitung 5c besteht ein hoher Gegendruck, so dass nur ein entsprechend geringer Anteil des Abgasstroms zum Turbinenrad gelangt, jedoch mit hoher Strömungsgeschwindigkeit und somit hohem Impuls. Hierdurch wird ein Abfall der Drehzahl des Turbinenrads und eines Verdichterrads verhindert, so dass der Motor M trotz eines geringen Drehzahlniveaus einlassseitig weiterhin mit verdichteter Luft beaufschlagt und die Wirksamkeit der Motorbremse gesteigert wird.

Fig. 4 zeigt ein Diagramm eines Verlaufs von Ladeluftdruck und Abgasgegendruck im Verhältnis zur Stellung der Vorrichtung 4 zur Drosselung des Abgasstroms bei einer maximalen Bremsdrehzahl, d.h. Motordrehzahl im Bremsbetrieb.

Der Ladeluftdruck beginnt bei völlig geschlossener Vorrichtung 4 zur Drosselung des Abgasstroms im Bremsbetrieb auf einem Niveau von ca. 30% des maximalen Werts. Der Ladeluftdruck bei vollständig geschlossener Vorrichtung 4 zur Drosselung des Abgasstroms resultiert aus dem durch die Bypassleitungen 5a, 5b, 5c an der Vorrichtung 4 zur Drosselung des Abgasstroms vorbei geführten Abgasstroms, welcher auf das Turbinenrad des Abgasturboladers geleitet wird und somit einen Ladeluftdruck erzeugt. Das Niveau des Ladeluftdrucks von 30% entspricht daher dem maximal durch die Bypassleitungen 6a, 5b erzeugbaren Ladeluftdruck. Der Abgasgegendruck beginnt bei ca. 50% des maximalen Werts bei vollständig geschlossener Vorrichtung 4 zur Drosselung des Abgasstroms, was dem von dem Motor erzeugten Abgasgegendruck in Verbindung mit dem aufgrund des Ladeluftdrucks erzeugten Anteil des Abgasgegendrucks entspricht. Mit Öffnung der Vorrichtung 4 zur Drosselung des Abgasstroms steigt dann der Ladeluftdruck auf ein Maximum, das hier bei ca. halboffener Vorrichtung 4 zur Drosselung des Abgasstroms erreicht wird. Bei weiterem Öffnen der Vorrichtung 4 zur Drosselung des Abgasstroms fällt der Ladeluftdruck wegen des geringer werdenden Gasdurchsatzes wieder ab bis er bei vollständig geöffneter Vorrichtung 4 zur Drosselung des Abgasstroms auf ein sehr geringes Niveau zurückgeht. Der Abgasgegendruck steigt in etwa parallel mit dem Ladeluftdruck und erreicht sein Maximum bei einer etwas weiter geschlossenen Stellung der Vorrichtung 4 zur Drosselung des Abgasstroms als der Ladeluftdruck und fällt dann ebenfalls auf ein sehr geringes Niveau bei vollständig geöffneter Vorrichtung 4 zur Drosselung des Abgasstroms.

Für einen bestimmten gewünschten Abgasgegendruck bei einer Bremsteillast gibt es meist zwei zugehörige mögliche Stellungen der Vorrichtung 4 zur Drosselung des Abgasstroms. Die günstigere Stellung ist dabei immer die Stellung mit dem höheren Ladedruck. Ein Regler erkennt die richtige Stellung der Vorrichtung 4 zur Drosselung des Abgasstroms aus einem Vergleich des aktuellen Ladedrucks mit einem Sollladedruck aus einem Kennfeld und regelt immer in die Richtung der Stellung der Vorrichtung 4 zur Drosselung des Abgasstroms für den Abgasgegendruck mit dem höheren Ladeluftdruck.

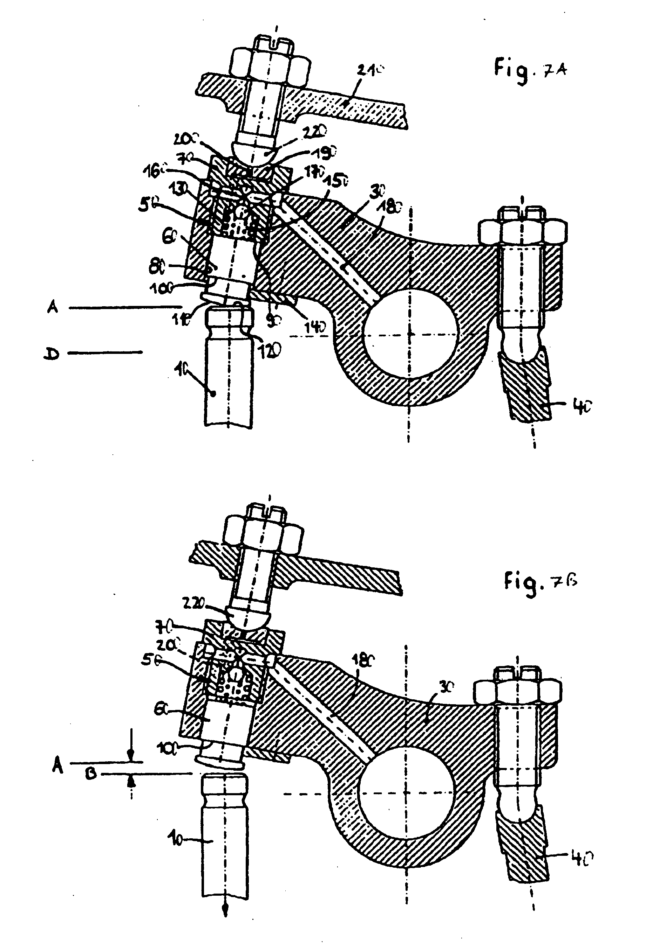

In den Fig. 7A - 7D sind gleiche bzw. einander entsprechende Teile mit gleichen Bezugszeichen gekennzeichnet.

Von dem dazugehörigen 4-Takt-Hubkolbenverbrennungsmotor ist in diesen Figuren nur der Schaft eines Auslassventils 10 und des zugehörigen Ventilbetätigungsmechanismus zu sehen, soweit er für das Verständnis der Erfindung erforderlich ist.

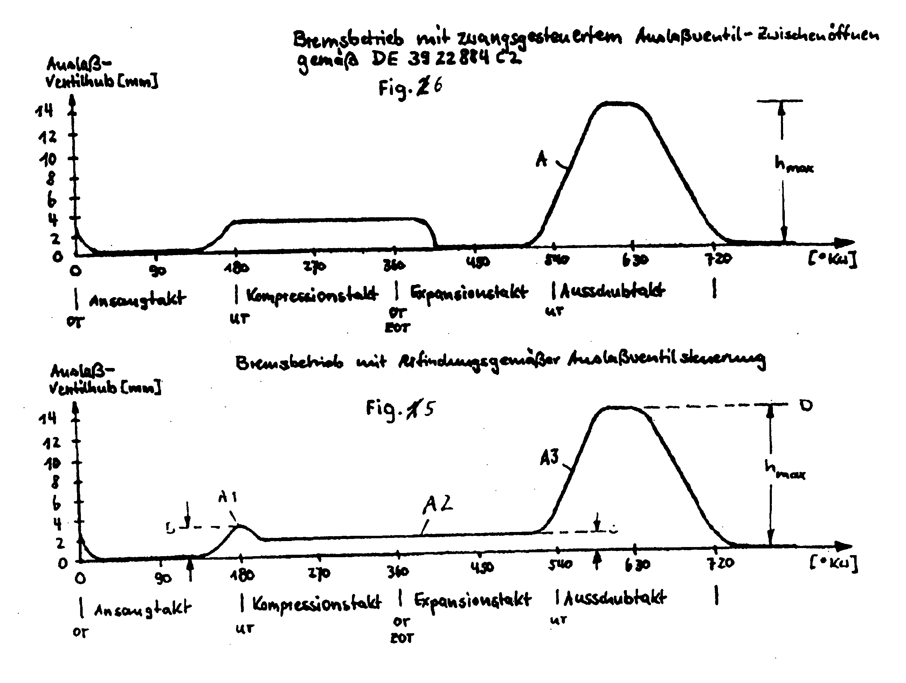

Grundsätzlich weist dieser 4-Takt-Hubkolbenverbrennungsmotor je Zylinder wenigstens ein an ein Auslasssystem angeschlossenes Auslassventil auf. Die Auslassventile sind von einer herkömmlichen Nockenwelle aus für Gaswechselvorgänge über entsprechende Ventilbetätigungsmechanismen steuerbar. In Verbindung mit dem Auslassventil gehört hierzu ein im Zylinderkopf 20 gelagerter Kipphebel 30, der, je nach Art der Anordnung der Nockenwelle am Motor, entweder direkt von dieser oder indirekt über eine Stößelstange 40 betätigbar ist. Das im Zylinderkopf 20 mit seinem Schaft geführte Auslassventil 10 ist durch eine nicht dargestellte Schließfeder permanent in Schließrichtung beaufschlagt. In das Auslasssystem ist eine Drosselvorrichtung, z.B. eine Drosselklappe eingebaut, die über eine zugehörige Steuerung zur Motorbremsung so betätigt wird, dass die Abgasströmung gedrosselt und so stromauf der Drosselvorrichtung ein Druckanstieg im Abgas erzeugt wird. Die beim Ausschieben benachbarter Zylinder entstehenden Druckwellen überlagern sich mit dem stationären Gegendruck und bewirken infolge der positiven Druckdifferenz ein Zwischenöffnen des Auslassventils 10 - siehe Phase A1 im Diagramm gemäß Fig. 5. In dieses unabhängig von der Nockenwellensteuerung erfolgende Auslassventil-Zwischenöffnen wird während des Bremsbetriebes erfindungsgemäß steuerungstechnisch eingegriffen, in dem das nach Zwischenöffnung unter der Einwirkung seiner Schließfeder wieder zum Schließen neigende Auslassventil 10 zwangsweise durch eine nockenwellenfern in den Auslassventilbetätigungsmechanismus eingebaute Steuereinrichtung 50 abgefangen und dann mittels dieser über den gesamten Kompressionstakt sowie Expansionstakt in teilgeöffneter Abfangposition gehalten wird - siehe Phase A2 im Diagramm gemäß Fig. 5.

Die Steuereinrichtung 50 kann auf unterschiedliche Art und Weise realisiert und an verschiedenen Stellen des Auslassventilbetätigungsmechanismus eingebaut sein. Beispiele hierfür geben die Fig. 7A - 7D an.

Im Beispiel gemäß Fig. 7A - 7D ist die Steuereinrichtung 50 im Kipphebel 30 wirksam eingebaut und besteht aus zwei Hauptorganen, nämlich einem Steuerkolben 60 und einer Steuerbuchse 70. Der Steuerkolben 60 ist leckagearm in einer Bohrung 80 des Kipphebels 30 axial zwischen zwei durch Anschläge 90, 100 begrenzten Endstellungen beweglich, wirkt vorn über eine gekrümmte Stirnfläche 110 auf die hintere Stirnfläche 120 des Auslassventilschaftes und ist rückseitig sowohl durch eine Druckfeder 130 beaufschlagt als auch hydraulisch druckbeaufschlagbar.

Die Steuerbuchse 70 ist in einem Gewindeabschnitt derselben Bohrung 80 im Kipphebel 30 über dem Steuerkolben 60 eingeschraubt und bildet mit ihrer vorderen Stirnfläche den hinteren Anschlag 90, der die eingefahrene Grundstellung des Steuerkolbens 60 definiert. Die ausgefahrene Endposition des Steuerkolbens 60 wird durch den vorderen Anschlag 100 begrenzt, der durch den hinteren Rand einer umlaufenden Nut am Steuerkolben 60 gebildet ist, in die ein am Kipphebel 30 befestigtes Hubbegrenzungsorgan 140 eingreift.

Die Steuerbuchse 70 weist einen nach vorn zum Steuerkolben 60 hin offenen Druckraum 150 auf, in den die den Steuerkolben 60 beaufschlagende Druckfeder 130 sowie ein nur die Einleitung von Druckmittel aus einem Druckmittelzufuhrkanal 160 zulassendes Rückschlagventil mit seinem druckfederbelasteten Schließorgan 170 eingebaut sind. Der steuerbuchsenintem aus einer Querbohrung und einer davon abgehend zentral in den Druckraum 150 ausmündenden Bohrung bestehende Druckmittelzufuhrkanal 160 wird über einen kipphebelinternen Speisekanal 18 vom Kipphebel-Lagerbereich 190 her mit Druckmittel, hier Schmieröl, bestimmten Druckes versorgt. Außerdem führt vom Druckraum 150 aus durch die Steuerbuchse 70 und ein in dieser fest eingebautes Einsatzstück 190 ein Entlastungskanal 200, dessen einsatzstückseitige Austrittsöffnung während eines Bremsvorganges in der Abfang- und Haltephase (A2) der Steuervorrichtung 50 zwecks Aufbau und Halten des Druckmitteldruckes im Druckraum 15 und eines damit einhergehenden Ausfahrens und Halten des Steuerkolbens 60 in ausgefahrener Auslassventil-Abfangposition durch einen fest am Zylinderdeckel 210 angeordneten Anschlag 220 verschlossen gehalten wird.

Nachfolgend ist anhand der Figurenfolge Fig. 7A - 7B - 7C - 7D auf einen vollständigen Zyklus während des Motorbremsens eingegangen.

Fig. 7A zeigt dabei das Auslassventil 10 anfangs des Ansaugtaktes in Schließstellung A (siehe dazu auch Diagramm in Fig. 5). Die Steuereinrichtung 50 wirkt in dieser Phase innerhalb des Kipphebels 30 als mechanischer Puffer, wobei der Steuerkolben 60 von unten her durch das Auslassventil 1 in eingefahrene Position gedrückt ist und die Steuerbuchse 70 über ihr Einsatzstück 190 am Anschlag 220 abgestützt ist. Ein eventuelles Ventilspiel wird durch teilweises Ausfahren des Steuerkolbens 60 überbrückt.

Fig. 7B zeigt die Verhältnisse in dem Moment, wenn das Auslassventil 10 während des Motorbremsens beim abgasgegendruckbedingten Zwischenöffnen seinen Maximalhub B in Phase A1 (siehe Diagramm Fig. 5) erreicht hat. Bei diesem Zwischenöffnen des Auslassventils 10 hebt dieses vom Steuerkolben 60 ab und dieser wird nun durch die Druckfeder 130 nachgeführt in seine Abfangposition ausgefahren. Dieses geht, weil der Steuerkolben 60 sich von der Steuerbuchse 70 wegbewegt, einher mit einer Vergrößerung des Druckraumes 150 und dessen Auffüllung mit Druckmittel über den Druckmittelzufuhrkanal 160, wobei nach vollständiger Auffüllung des Druckraumes 150, zum einen wegen des sperrenden Rückschlagventils 170 und zum anderen wegen der abgesperrten Austrittsöffnung des Entlastungskanals 200, der Steuerkolben 160 in seiner ausgefahrenen Abfangstellung (vorgegeben durch Anschlag 100) hydraulisch verblockt ist. Dieser Zustand ist aus Fig. 7B ersichtlich. Aus Fig. 7B ist außerdem ersichtlich, dass das Auslassventil 10 beim Zwischenöffnen diesem Steuerkolbenhub mit größerem Hub A - B voreilt.

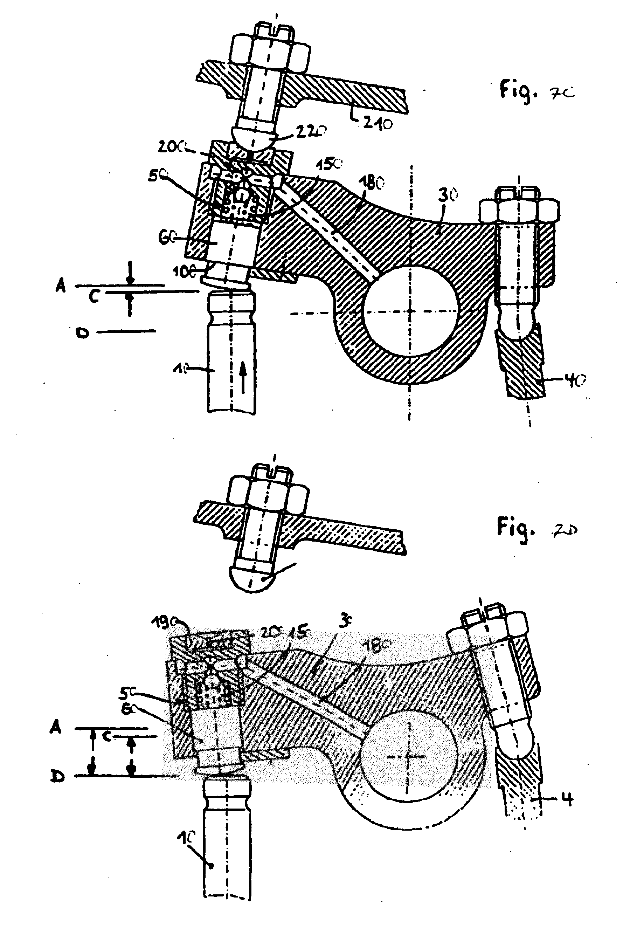

Beim Übergang von Phase A1 nach Phase A2 bewegt sich das Auslassventil 10 wieder in Schließrichtung, wird dann aber schon nach kurzem Weg B - C durch die hydraulisch verblockte Steuereinrichtung 50 abgefangen. Fig. 7C zeigt diese Abfangposition C bei ansonsten gleichen Verhältnissen wie in Fig. 7B, welche Abfangposition C über den gesamten restlichen Kompressionstakt und folgenden Expansionstakt erhalten bleibt.

Erst dann, wenn am Ende des Expansionstaktes die nockenwellenseitige Steuerung des Auslassventils 10 über den zugehörigen Auslassnocken wieder wirksam wird, erfolgt eine Aufhebung dieser vorherigen hydraulischen Verblockung der Steuereinrichtung 50, denn, sobald der Kipphebel 3 in Richtung Auslassventil öffnen bewegt wird, hebt die Steuerbuchse 70 mit ihrem Einsatzstück 190 vom Anschlag 220 ab. Dadurch wird der Entlastungskanal 200 freigegeben und Druckmittel kann aus dem Druckraum 150 der nun nicht mehr verblockten Steuereinrichtung 50 abströmen und zwar unter der Einwirkung des vom Auslassventil 10 in Richtung seiner eingefahrenen Grundposition gedrückten Steuerkolbens 60.

Sobald der Steuerkolben 60 voll eingerückt ist, wirkt die Steuereinrichtung 50 wieder nur als rein mechanischer Puffer am Kipphebel 30, über den dann in Phase A3 (siehe Diagramm gemäß Fig. 5) während des Ausschubtaktes beim Motorbremsen das Öffnen des Auslassventils 10 bis zum vollen Auslassventilhub D - diese Position zeigt Fig. 7D -, dessen Halten und Wiederschließen gesteuert durch den zugehörigen Auslasssteuernocken der Nokkenwelle erfolgt.

Am Ende des Ausschubtaktes beim Motorbremsen nimmt der Kipphebel 30 mit der Steuereinrichtung 50 wieder die in Fig. 7A gezeigte Position ein, aus der der nächste Bremszyklus erfolgt.

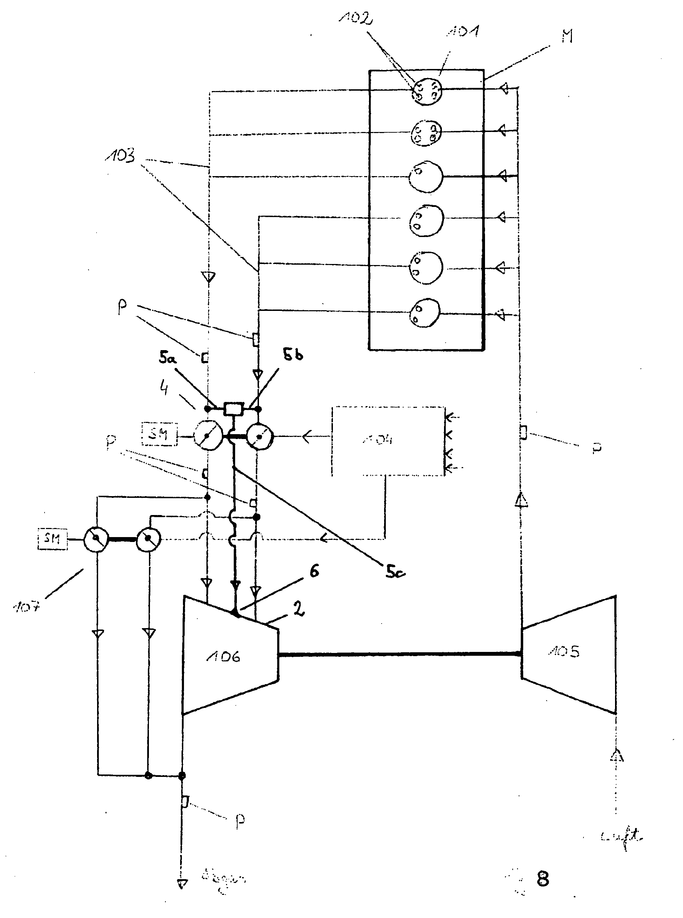

Fig. 8 zeigt eine Übersicht bzw. ein Funktionsschema eines Beispiels der erfindungsgemäßen Vorrichtung zur Motorbremsung einer mehrzylindrigen Brennkraftmaschine bzw. eines mehrzylindrigen Motors M umfassend eine Drosselvorrichtung 4 sowie eine weitere Einrichtung zur Ladedruckregelung 107.

Der in Fig. 8 dargestellte Motor M arbeitet vorzugsweise nach dem Dieselprinzip und umfasst sechs Zylinder 101. Jeder der Zylinder 101 weist zumindest ein Auslassventil 102 auf. Der Motor M weist ferner einen Abgasturbolader, umfassend einen Ladeluftverdichter 105 und eine Abgasturbine 106, auf. Der Abgasturbolader kann einstufig oder mehrstufig ausgebildet sein.

Der Ladeluftverdichter 105 ist über ein Kanalsystem mit dem Lufteinlassbereich des Motors M bzw. den Zylindern 101 des Motors M verbunden. Der Ladeluftverdichter 105 wird über eine mechanische Verbindung, vorzugsweise über eine Welle, von der Abgasturbine 106 angetrieben. Zwischen dem Lufteinlassbereich bzw. den Zylindern 101 des Motors M und dem Ladeluftverdichter 105 befindet sich zumindest ein Drucksensor P bekannter Bauart, der den statischen und/oder dynamischen Druck der von dem Ladeluftverdichter 105 angesaugten und anschließend verdichteten Luft ermittelt bzw. misst. Vor dem Ladeluftverdichter 105 kann zusätzlich ein Luftfilter (nicht in Fig. 8 dargestellt) zur Reinigung der Luft von entsprechenden Partikeln bestimmter Art und Größe vorgesehen bzw. angeordnet sein.

An seiner Auslassseite weist der Motor M zumindest einen Abgaskrümmer 103 auf, welcher mit dem zumindest einen Auslassventil 102 jedes Zylinders 101 verbunden ist. Der Abgaskrümmer 103 ist ferner mit der Abgasturbine 106 des Abgasturboladers verbunden. Zwischen dem Motor M bzw. dem Abgaskrümmer 103 und der Abgasturbine 106 weist die Vorrichtung zur Motorbremsung eine Vorrichtung 4 zur Drosselung des Abgasstroms auf. Die Drosselvorrichtung 4 umfasst dabei beispielsweise Drosselklappen 4, welche durch ihre Stellung bzw. Position im Gehäuse der Drosselvorrichtung den durchströmten Querschnitt des Abgasstroms und somit den Abgasgegendruck beeinflussen können. Ferner umfasst die Vorrichtung zur Motorbremsung zumindest eine Bypassleitung 5a, 5b, welche den Abgasstrom innerhalb einer gemeinsamen Bypassleitung 5c an der Vorrichtung 4 zur Drosselung des Abgasstroms vorbei leiten kann. Die gemeinsame Bypassleitung 5c ist mit der Abgasturbine 106 bzw. dem Turbinenradgehäuse 2 über eine Düsenbohrung 6 im Turbinenradgehäuse 2 verbunden, sodass insbesondere bei geschlossener Vorrichtung 4 zur Drosselung des Abgasstroms ein reduzierter Abgasstrom die Abgasturbine 106 und somit den Ladeluftverdichter 105 antreiben kann.

Die beispielsweise in Form von Drosselklappen 4 ausgeführte Vorrichtung 4 zur Drosselung des Abgasstroms wird bezüglich ihrer Position vorzugsweise über eine Stell- bzw. Steuereinrichtung SM, 104 gesteuert, wobei die Drosselklappen 4 mechanisch miteinander verbunden sind. Zwischen der Drosselvorrichtung 4 und dem Motor M bzw. den Auslassventilen 102 der Zylinder 101 kann sich zumindest ein Drucksensor P bekannter Bauart befinden, der den statischen und/oder dynamischen Druck des Abgases erfasst bzw. misst. Zusätzlich oder alternativ dazu kann sich zumindest ein weiterer Drucksensor P stromab der Drosselvorrichtung 4 befinden.

Wie bereits eingangs genannt, weist die erfindungsgemäße Vorrichtung ferner zumindest eine weitere Einrichtung 107 zu Ladedruckregelung auf. Die Einrichtung 107 zur Ladedruckregelung umfasst zumindest eine Bypassleitung, die bezüglich des Abgasstroms die Abgasturbine 106 umgeht. Die zumindest eine Bypassleitung weist ferner zumindest ein Waste Gate bzw. ein Bypassventil auf. Über die zumindest eine Bypassleitung kann bei geöffnetem Bypassventil das Abgas vor der Abgasturbine 106 abgezweigt werden und das Abgas strömt an der Abgasturbine 106 vorbei, beispielsweise in ein Abgasnachbehandlungssystem und/oder Schalldämpfersystem. Das zumindest eine Waste Gate bzw. Bypassventil wird bezüglich seiner Wirkung auf das Abgas bzw. dessen Druck über die Stell- bzw. Steuereinrichtung SM, 104 gesteuert.

Wenn nicht die volle Bremsleistung benötigt wird, wird die vorhandene Einrichtung 107 zur Ladedruckregelung zusätzlich oder alternativ zur Regelung über die Drosselvorrichtung oder die Vorrichtung 4 zur Drosselung des Abgasstroms eingesetzt, da sich dadurch der Ladedruck und damit die Bremsleistung schneller und feinfühliger einstellen lässt. Der Ladeluftverdichter 105 erzeugt einen vorgegebenen Ladedruck im Zylinder 101 des Motors M, wobei der Abgasstrom über das zumindest eine Auslassventil 102 jedes Zylinders 101 über den Abgaskrümmer 103 der Vorrichtung 4 zur Drosselung des Abgasstroms zugeführt wird.

Bei einer bestimmten Motordrehzahl stellt sich zu einer Stellung der Drosselvorrichtung 4 immer ein definierter Ladedruck ein. Wie bereits genannt, sind die Bypass- bzw. Zuführungsleitungen der Einrichtung 107 zur Ladedruckregelung im Abgaskanal zwischen der Vorrichtung 4 zur Drosselung des Abgasstroms und nach dem Ausgang der Abgasturbine 106 angeordnet. Die Einrichtung 107 zur Ladedruckregelung leitet eine vorgegebene Menge des Abgasstroms an der Abgasturbine 106 vorbei, wobei der an der Abgasturbine 106 vorbeigeleitete Abgasstrom nach der Abgasturbine 106 wieder in den Abgaskanal mündet.

Sowohl die Einrichtung 107 zur Ladedruckregelung, als auch die Vorrichtung 4 zur Drosselung des Abgasstroms werden von einer Steuereinrichtung 104 angesteuert. Soll ein Ladedruck, welcher geringer als ein maximaler Ladedruck ist, eingeregelt werden, wird die Einrichtung 107 zur Ladedruckregelung soweit geöffnet, dass sich der gewünschte Ladedruck einstellt. Zur Erzielung der maximalen Bremsleistung wird das Waste Gate bzw. Bypassventil geschlossen, und es wird auf maximalen Ladedruck geregelt.

Entsprechend einer weiteren Ausführungsform der Erfindung kann die Regelung des Abgasgegendrucks sowie des Ladeluftdrucks zusätzlich zur Regelung durch die Vorrichtung 4 zur Drosselung des Abgasstroms durch eine Einrichtung 107 zur Ladedruckregelung erfolgen. Die Einrichtung 107 zur Ladedruckregelung ist vorzugsweise durch ein Waste Gate gebildet.

Die Erfindung wurde anhand von Beispielen näher erläutert, ohne auf die konkrete Ausführungsformen begrenzt zu sein.

## Patentansprüche

1. Verfahren zur Motorbremsung eines vorzugsweise nach dem Dieselprinzip arbeitenden Motors (M), der zumindest einen von einem Abgasstrom beaufschlagten Abgasturbolader mit einer Abgasturbine (106) und einem Ladeluftverdichter (105), die auf einer gemeinsamen Welle angeordnet sind, aufweist, mit einem Abgaskrümmer (103), der den Abgasstrom von Auslassventilen (102) des Motors (M) zum Abgasturbolader leitet, und mit einer zwischen den Auslassventilen (102) und dem zumindest einen Abgasturbolader angeordneten Vorrichtung (4) zur Drosselung des Abgasstroms, sowie zumindest einer Bypassleitung (5a, 5b, 5c) zum Vorbeiführen des Abgasstroms an der Vorrichtung (4) zur Drosselung des Abgasstroms, wobei der Abgasstrom durch die zumindest eine Bypassleitung (5a, 5b, 5c) auf ein Turbinenrad der Abgasturbine (106) geleitet wird, der Abgasstrom gedrosselt und so stromauf der Vorrichtung (4) zur Drosselung des Abgasstroms ein Druckanstieg im Abgas erzeugt wird, eine Messung eines Abgasgegendrucks, sowie eines Ladeluftdrucks erfolgt, **dadurch gekennzeichnet, dass** basierend auf der Messung (S10) des Abgasgegendrucks und des Ladeluftdrucks eine Stellung der Vorrichtung (4) zur Drosselung des Abgasstroms zum Erzielen einer vorbestimmten Bremsleistung ermittelt wird und eine Regelung des Abgasgegendrucks sowie des Ladeluftdrucks durch die Vorrichtung (4) zur Drosselung des Abgasstroms entsprechend der ermittelten Stellung der Vorrichtung (4) zur Drosselung des Abgasstroms erfolgt und dass falls der aktuelle Abgasgegendruck geringer als ein gewünschter Abgasgegendruck ist und der Ladeluftdruck einem vorbestimmten Wert entspricht (S20), die Stellung der Vorrichtung (4) zur Drosselung des Abgasstroms weiter geschlossen wird (S30) oder alternativ dazu falls der aktuelle Abgasgegendruck geringer als ein gewünschter Abgasgegendruck ist und der Ladeluftdruck kleiner einem vorbestimmten Wert ist (S40), die Stellung der Vorrichtung (4) zur Drosselung des Abgasstroms weiter geöffnet wird (S50).

2. Verfahren nach Anspruch 1, **dadurch gekennzeichnet, dass** die optimale Stellung der Vorrichtung (4) zur Drosselung des Abgasstroms in einem ersten Drehzahlbereich des Motors (M) eine Schließstellung (S₂) ist, in welcher der Querschnitt eines Abgassystems blockiert wird und der Abgasstrom durch die zumindest eine Bypassleitung (5a, 5b, 5c) an der Vorrichtung (4) zur Drosselung des Abgasstroms vorbeigeführt wird.

3. Verfahren nach Anspruch 1, **dadurch gekennzeichnet, dass** die optimale Stellung der Vorrichtung (4) zur Drosselung des Abgasstroms in einem ersten Drehzahlbereich des Motors (M) eine Schließstellung (S₁) ist, in welcher zumindest ein Teil des Querschnitts des Abgassystems freigegeben wird und zumindest ein Teil des Abgasstroms durch die zumindest eine Bypassleitung (5a, 5b, 5c) an der Vorrichtung (4) zur Drosselung des Abgasstroms vorbeigeführt wird.

4. Verfahren nach einem der vorhergehenden Ansprüche, **dadurch gekennzeichnet, dass** die optimale Stellung der Vorrichtung (4) zur Drosselung des Abgasstroms in einem zweiten Drehzahlbereich des Motors eine Schließstellung (S₁) ist, in welcher zumindest ein Teil des Querschnitts des Abgassystems freigegeben wird und ein Teil des Abgasstroms durch die zumindest eine Bypassleitung (5a, 5b, 5c) an der Vorrichtung (4) zur Drosselung des Abgasstroms vorbeigeführt wird.

5. Verfahren nach einem der vorhergehenden Ansprüche, **dadurch gekennzeichnet, dass** der erste Drehzahlbereich des Motors (M) ein Drehzahlbereich kleiner gleich 1400 Umdrehungen pro Minute ist und der zweite Drehzahlbereich des Motors ein Drehzahlbereich größer als 1400Umdrehungen pro Minute bis zu einer Höchstdrehzahl des Motors (M) ist.

6. Verfahren nach einem der vorhergehenden Ansprüche, **dadurch gekennzeichnet, dass** zur Erzielung einer maximalen Bremsleistung bei einer jeweiligen Motordrehzahl zuerst ein maximaler Ladeluftdruck eingeregelt wird und nach Erreichen des für die Motordrehzahl maximalen Ladeluftdrucks eine Regelung des maximalen Abgasgegendrucks erfolgt.

7. Verfahren nach einem der vorhergehenden Ansprüche, **dadurch gekennzeichnet, dass** zumindest eine Stellung der Vorrichtung (4) zur Drosselung des Abgasstroms einem bestimmten Abgasgegendruck entspricht.

8. Verfahren nach Anspruch 7, **dadurch gekennzeichnet, dass** eine Erkennung einer richtigen Stellung der Vorrichtung (4) zur Drosselung des Abgasstroms aus einem Vergleich des aktuellen Ladeluftdrucks mit einem Sollladeluftdruck bei dem aktuellen Abgasgegendruck erfolgt.

9. Verfahren nach einem der vorhergehenden Ansprüche, **dadurch gekennzeichnet, dass** in einem Drehzahlbereich von 0 bis 1400 Umdrehungen pro Minute des Motors (M) die Vorrichtung (4) zur Drosselung des Abgasstroms in eine Schließstellung (S₂) gestellt wird, in welcher sowohl der Querschnitt des Abgassystems als auch die zumindest eine Bypassleitung (5a, 5b, 5c) blockiert werden.

10. Verfahren nach einem der vorhergehenden Ansprüche, **dadurch gekennzeichnet, dass** die zumindest eine Bypassleitung (5a, 5b, 5c) durch ein Schwenken der Vorrichtung (4) zur Drosselung des Abgasstroms verschlossen wird.

11. Verfahren nach einem der vorhergehenden Ansprüche, **dadurch gekennzeichnet, dass** die Regelung des Abgasgegendrucks sowie des Ladeluftdrucks zusätzlich zur Regelung durch die Vorrichtung (4) zur Drosselung des Abgasstroms durch eine Einrichtung (107) zur Ladedruckregelung erfolgt, in die wenigstens ein die Abgasturbine (i06) umgehendes Waste Gate eingebunden ist.

12. Verfahren nach einem der vorhergehenden Ansprüche, **dadurch gekennzeichnet, dass** der Motor (M) je Zylinder (101) wenigstens ein an ein Auslasssystem angeschlossenes Auslassventil (102) aufweist, in welches Auslasssystem die Vorrichtung (4) zur Drosselung eingebaut ist, die zur Motorbremsung so betätigt wird, dass die Abgasströmung gedrosselt und so stromauf der Vorrichtung (4) zur Drosselung der Druckanstieg im Abgas erzeugt wird, das nach einem Zwischenöffnen des Auslassventils (102) in den Verbrennungsraum rückströmt und während des anschließenden Kompressionstaktes bei weiterhin teiloffengehaltenem Auslassventil (102) für eine erhöhte Motorbremsleistung sorgt, wobei beim Motorbremsen in ein Zwischenöffnen des Auslassventils (10, 102), das bei in Drosselstellung befindlicher Vorrichtung (4) zur Drosselung durch den im Abgas hervorgerufenen Druckanstieg bewirkt wird, steuerungstechnisch eingegriffen wird, in dem das nach Zwischenöffnung zum Schließen neigende Auslassventil (10, 102) zwangsweise durch eine nockenwellenfem in den Auslassventilbetätigungsmechanismus eingebaute Steuereinrichtung (50) abgefangen am Schließen gehindert und dann längstens bis zur nockengesteuerten Auslassventilöffnung teilweise offen gehalten wird.

13. Verfahren nach Anspruch 12, **dadurch gekennzeichnet, dass** am Ende des Expansionstaktes, wenn die nockenwellenseitige Steuerung des Auslassventils (10) wieder wirksam wird, die Haltefunktion der vorher als hydraulisch gesperrter Puffer wirkenden Steuereinrichtung (50) aufgehoben und dann die Öffnung des Auslassventils (10) bis zu dessen vollem Hub, dessen Halten und Wiederschließen während des Ausschubtaktes durch den zugehörigen normalen Auslassventilsteuernocken über den Auslassventilbetätigungsmechanismus mit der dann darin nur noch als mechanischer Puffer wirkenden Steuereinrichtung (50) gesteuert wird.

14. Verfahren nach einem Ansprüche 12 oder 13, **dadurch gekennzeichnet, dass** die Steuereinrichtung (50) in einem zylinderkopfseitig gelagerten Kipphebel (30) eingebaut wirksam ist und aus einem in einer Bohrung (80) des Kipphebels (30) leckagearm axial zwischen zwei mechanisch durch Anschläge (90, 100) begrenzten Endstellungen beweglichen, vorn auf die hintere Stirnfläche (120) des Auslassventilschaftes wirkenden und rückseitig durch eine Druckfeder (130) sowie hydraulisch beaufschlagten Steuerkolben (60) und einer in einen Gewindeabschnitt der selben Kipphebelbohrung (80) eingeschraubten Steuerbuchse (70) besteht, in deren nach vorn zum Steuerkolben (60) hin offenem Druckraum (150) die den Steuerkolben (60) beaufschlagende Druckfeder (130) sowie ein nur die Einleitung von Druckmittel aus einem Druckmittelzufuhrkanal (160) zulassendes Rückschlagventil mit einem druckfederbelasteten Schließorgan (170) eingebaut sind, welcher Druckmittelzufuhrkanal (160) über einen kipphebelinternen Speisekanal (180) mit Druckmittel versorgt wird, wobei vom Druckraum (150) aus durch die Steuerbuchse (70) zu deren oberem Ende ein Entlastungskanal (200) führt, dessen Austrittsöffnung während eines Bremsvorganges in der Abfang- und Haltephase der Steuervorrichtung (50) zwecks Aufbau und Halten des Druckmitteldruckes im Druckraum (150) und eines damit einhergehenden Ausfahrens und Halten des Steuerkolbens (60) in ausgefahrener Auslassventil-Abfangposition (C) durch einen zylinderdeckeifest angeordneten Anschlag (220) verschlossen gehalten wird.

15. Verfahren nach Anspruch 14, **dadurch gekennzeichnet, dass** während eines Bremsvorganges beim abgasgegendruckbedingten Zwischenöffnen des Auslassventils (10) der Steuerkolben (60) aufgrund der im Druckraum (150) wirkenden Kräfte - dem Auslassventilschaft folgend - in seine ausgefahrene Endposition ausgeschoben und damit einhergehend der sich volumenmäßig vergrößernde Druckraum (150) mit Druckmittel aufgefüllt wird, somit der Steuerkolben (60) anschließend hydraulisch in Auslassventil-Abfangposition (C) verblockt ist und in dieser das sich in Schließrichtung bewegende Auslassventil (10) mit seiner Stirnfläche (110) abfängt und entsprechend offen hält.

16. Verfahren nach Anspruch 15, **dadurch gekennzeichnet, dass** die Rückführung des Steuerkolbens (60) aus seiner Auslassventil-Abfangposition (C) in seine eingefahrene Grundstellung am Ende der Haltephase in der Weise erfolgt, dass bei nockenwellenseitig mit dem normalen Auslassnocken direkt oder indirekt über eine Stößelstange (40) erfolgender Betätigung des Kipphebels (30) durch dessen Wegschwenken vom zylinderdeckelseitigen Anschlag (220) die Austrittsöffnung des steuerbuchseninternen Entlastungskanals (200) am oberen Ende der Steuerbuchse (70) freigegeben wird, somit das im Druckraum (150) befindliche Druckmittel druckentlastet und vom nun nachrückfähigen, nicht mehr mit dem Kipphebel (30) verblockten Steuerkolben (60) volumenentlastet wird, solange, bis dieser seine vollständig eingefahrene Grundstellung eingenommen hat.

17. Verfahren nach einem der Ansprüche 12 und 13, unter Anwendung bei einem Verbrennungsmotor mit untenliegender Nockenwelle, von der aus die Betätigung eines Auslassventils über eine Stößelstange und einen nachfolgenden Kipphebel erfolgt, **dadurch gekennzeichnet, dass** die Steuereinrichtung (50) im Raum zwischen Stößelstange (40) und Krafteinleitorgan (230) des Kipphebels (30) in einer im bzw. am Zylinderkopf (20) angeordneten Aufnahmehülse (240) wirksam ist und eine in der Aufnahmehülse (240) leckagearm koaxial verschiebbaren, unten am oberen Ende der Stößelstange (40) abgestützte Steuerhülse (270) sowie einen in einer Sacklochbohrung (280) der Steuerhülse (270) leckagearm koaxial verschiebbar eingebauten Steuerkolben (290) aufweist, der oben an einem gelenkig mit dem Krafteinleitorgan (230) des Kipphebels (30) verbundenen Schubübertragungsteil (300) abgestützt und unten von einer in Richtung des letzteren wirkenden Druckfeder (310) beaufschlagt ist, die in dem unterhalb des Steuerkolbens (290) gegebenen Teil der Sacklochbohrung (280) und solchermaßen begrenzten hydraulischen Druckraum (320) eingebaut ist, der über einen zylinderkopf- bzw. bockinternen Speisekanal (330) sowie einen aufnahmehülseninternen Speisekanal (340) und einen mit diesem kommunizierenden steuerhülseninternen Zufuhrkanal (350) mit Druckmittel, insbesondere Motoröl, versorgt ist, wobei ein in den Druckraum (320) eingebautes Rückschlagventil mit seinem federbelasteten Schließorgan (360) ein Rückströmen von Druckmittel aus dem Druckraum (320) in den Zufuhrkanal (350) verhindert.

18. Verfahren nach Anspruch 17, **dadurch gekennzeichnet, dass** während eines Bremsvorganges beim abgasgegendruckbedingten Zwischenöffnen des Auslassventils (10) der Steuerkolben (290) aufgrund der im Druckraum (320) wirkenden Kräfte ausgefahren und dabei der Kipphebel (30) nachgeführt wird, wobei beim Ausfahren des Steuerkolbens (290) nach einem auf den Aufspringhub (A-B) des Auslassventils (10) abgestimmten Hubweg die Austrittsöffnung eines steuerkolbeninternen Entlastungskanals (400) durch Austauchen aus der steuerhülsenseitigen Sacklochbohrung (280) freigegeben und über diesen Entlastungskanal (400) das druckrauminterne Druckmittel druckentlastet wird und dass zu Beginn der anschließenden Schließbewegung des Auslassventils (10) über den entsprechend nachgeführten Kipphebel (30) und das Schubübertragungsteil (300) der Steuerkolben (290) wieder in Richtung seiner unausgefahrenen Grundstellung verschoben wird, solange, bis die Austrittsöffnung des Entlastungskanals (400) durch die Wand der Sacklochbohrung (280) wieder verschlossen ist, wodurch der Druckraum (320) wieder abgesperrt, damit die Steuereinrichtung (50) hydraulisch blockiert und das Auslassventil (10) in der entsprechenden Teilöffnungsstellung (C) abgefangen gehalten bleibt.

19. Verfahren nach den Ansprüchen 17 und 18, **dadurch gekennzeichnet, dass** die Aufhebung der hydraulischen Verblockung des Steuerkolbens (290) in der Steuerhülse (270) und dessen Rückführung aus Auslassventil-Abfangposition (C) in seine unausgefahrene Grundstellung (A) dann erfolgt, wenn bei nockenwellenseitig mit dem normalen Auslassnocken erfolgender Betätigung der Stößelstange (40) und damit einhergehendem Hub der Steuerhülse (270) nach einem bestimmten, auf den Maximal-Qffnungshub (A - D) des Auslassventils (10) abgestimmten Hub der Steuerhülse (270) durch deren Austauchen aus der Aufnahmebohrung (280) der Aufnahmehülse (240) der Austrittsquerschnitt einer vom Druckraum (320) quer abgehenden Entlastungsbohrung (410) freigegeben wird, somit das im Druckraum (320) befindliche Druckmittel druckentlastet und vom nun nachrückfähigen Steuerkolben (290) volumenentlastet wird, solange, bis dieser seine vollständig eingefahrene Grundstellung eingenommen hat, welche bei Aufsitzen des Schubübertragungsteiles (300) an der Stirnseite (420) der Steuerhülse (270) gegeben ist.

20. Verfahren nach einem der Ansprüche 12 bis 19, **dadurch gekennzeichnet, dass** das Auslassventil (10) nach abgasgegendruckbewirktem Zwischenöffnen in einer Abfangposition (C) gehalten wird, deren Abstand zur Schließposition etwa 1/5 bis 1/20 des vollen nockenwellengesteuerten Auslassventil-Öffnungshubes (A-D) beträgt.

21. Verfahren nach einem der Ansprüche 12 bis 20, **dadurch gekennzeichnet, dass** die Steuereinrichtung (50) auch als hydraulisches Ventilspielausgleichsorgan herangezogen wird, wobei ein im Ventilbetätigungsmechanismus auftretendes Spiel durch entsprechende Druckmittelnachfüllung in den Druckraum (150 bzw. 320) mit entsprechender Nachführung des Steuerkolbens (60 bzw. 290) in Richtung des zu beaufschlagenden Organs (10 bzw. 300) ausgeglichen wird.

22. Vorrichtung zur Durchführung eines Verfahrens nach einem der vorhergehenden Ansprüche mit einem vorzugsweise nach dem Dieselprinzip arbeitenden Motor (M), der zumindest einen von einem Abgasstrom beaufschlagten Abgasturbolader mit einer Abgasturbine (106) und einem Ladeluftverdichter (105), die auf einer gemeinsamen Welle angeordnet sind, aufweist, mit einem Abgaskrümmer (103), der den Abgasstrom von Auslassventilen (102) des Motors (M) zum Abgasturbolader leitet, und mit einer zwischen den Auslassventilen (102) und dem zumindest einen Abgasturbolader angeordneten Vorrichtung (4) zur Drosselung des Abgasstroms, sowie zumindest einer Bypassleitung (5a, 5b, 5c) zum Vorbeiführen des Abgasstroms an der Vorrichtung (4) zur Drosselung des Abgasstroms, wobei der Abgasstrom durch die zumindest eine Bypassleitung (5a, 5b, 5c) auf ein Turbinenrad der Abgasturbine (106) geleitet wird, der Abgasstrom gedrosselt und so stromauf der Vorrichtung (4) zur Drosselung des Abgasstroms ein Druckanstieg im Abgas erzeugt wird, sowie Mittel zur Messung eines Abgasgegendrucks (P), sowie eines Ladeluftdrucks vorgesehen sind, **dadurch gekennzeichnet, dass** eine Steuereinrichtung (104) vorgesehen ist, welche sich eignet, basierend auf der Messung (S10) des Abgasgegendrucks und des Ladeluftdrucks eine Stellung der Vorrichtung (4) zur Drosselung des Abgasstroms zum Erzielen einer vorbestimmten Bremsleistung zu ermitteln und die Steuereinrichtung (104) eine Regelung des Abgasgegendrucks sowie des Ladeluftdrucks durch die Vorrichtung (4) zur Drosselung des Abgasstroms entsprechend der ermittelten Stellung der Vorrichtung (4) zur Drosselung des Abgasstroms durchführt und die Steuereinrichtung (104) falls der aktuelle Abgasgegendruck geringer als ein gewünschter Abgasgegendruck ist und der Ladeluftdruck einem vorbestimmten Wert entspricht (S20), die Stellung der Vorrichtung (4) zur Drosselung des Abgasstroms weiter schließt (S30) oder alternativ dazu falls der aktuelle Abgasgegendruck geringer als ein gewünschter Abgasgegendruck ist und der Ladeluftdruck kleiner einem vorbestimmten Wert ist (S40), die Stellung der Vorrichtung (4) zur Drosselung des Abgasstroms weiter öffnet (S50).

## Claims

1. Method for engine braking of an engine (M) operating preferably on the diesel principle, which engine (M) has at least one exhaust-gas turbocharger having an exhaust-gas turbine (106) acted on by an exhaust-gas flow and having a charge air compressor (105), which exhaust-gas turbine and charge air compressor are arranged on a common shaft, having an exhaust manifold (103) which conducts the exhaust-gas flow from outlet valves (102) of the engine (M) to the exhaust-gas turbocharger, and having a device (4) for throttling the exhaust-gas flow arranged between the outlet valves (102) and the at least one exhaust-gas turbocharger, and also having at least one bypass line (5a, 5b, 5c) for conducting the exhaust-gas flow past the device (4) for throttling the exhaust-gas flow, the exhaust-gas flow being conducted through the at least one bypass line (5a, 5b, 5c) to a turbine wheel of the exhaust-gas turbine (106), the exhaust-gas flow being throttled and a pressure increase in the exhaust gas thus being generated upstream of the device (4) for throttling the exhaust-gas flow, and a measurement of an exhaust-gas counterpressure and of a charge air pressure taking place, **characterized in that**, on the basis of the measurement (S10) of the exhaust-gas counterpressure and of the charge air pressure, a position of the device (4) for throttling the exhaust-gas flow to obtain a predetermined braking action is determined, and regulation of the exhaust-gas counterpressure and of the charge air pressure is carried out by means of the device (4) for throttling the exhaust-gas flow corresponding to the determined position of the device (4) for throttling the exhaust-gas flow, and **in that**, if the present exhaust-gas counterpressure is lower than a desired exhaust-gas counterpressure and the charge air pressure corresponds to a predetermined value (S20), the position of the device (4) for throttling the exhaust-gas flow is closed further (S30), or alternatively, if the present exhaust-gas counterpressure is lower than a desired exhaust-gas counterpressure and the charge air pressure is lower than a predetermined value (S40), the position of the device (4) for throttling the exhaust-gas flow is opened further (S50).

2. Method according to Claim 1, **characterized in that** the optimum position of the device (4) for throttling the exhaust-gas flow in a first rotational speed range of the engine (M) is a closed position (S₂) in which the cross section of an exhaust system is blocked and the exhaust-gas flow is conducted through the at least one bypass line (5a, 5b, 5c) past the device (4) for throttling the exhaust-gas flow.

3. Method according to Claim 1, **characterized in that** the optimum position of the device (4) for throttling the exhaust-gas flow in a first rotational speed range of the engine (M) is a closed position (S₁) in which at least a part of the cross section of the exhaust system is opened up and at least a part of the exhaust-gas flow is conducted through the at least one bypass line (5a, 5b, 5c) past the device (4) for throttling the exhaust-gas flow.

4. Method according to one of the preceding claims, **characterized in that** the optimum position of the device (4) for throttling the exhaust-gas flow in a second rotational speed range of the engine is a closed position (S₁) in which at least a part of the cross section of the exhaust system is opened up and a part of the exhaust-gas flow is conducted through the at least one bypass line (5a, 5b, 5c) past the device (4) for throttling the exhaust-gas flow.

5. Method according to one of the preceding claims, **characterized in that** the first rotational speed range of the engine (M) is a rotational speed range lower than or equal to 1400 revolutions per minute, and the second rotational speed range of the engine is a rotational speed range higher than 1400 revolutions per minute up to a maximum rotational speed of the engine (M).

6. Method according to one of the preceding claims, **characterized in that**, to obtain a maximum braking action at a respective engine rotational speed, firstly a maximum charge air pressure is set and, after the maximum charge air pressure for the engine rotational speed is reached, regulation of the maximum exhaust-gas counterpressure is carried out.

7. Method according to one of the preceding claims, **characterized in that** at least one position of the device (4) for throttling the exhaust-gas flow corresponds to a certain exhaust-gas counterpressure.

8. Method according to Claim 7, **characterized in that** a detection of a correct position of the device (4) for throttling the exhaust-gas flow is carried out from a comparison of the present charge air pressure with a setpoint charge air pressure at the present exhaust-gas counterpressure.

9. Method according to one of the preceding claims, **characterized in that**, in a rotational speed range of the engine (M) from 0 to 1000 revolutions per minute, the device (4) for throttling the exhaust-gas flow is set into a closed position (S₂) in which both the cross section of the exhaust system and also the at least one bypass line (5a, 5b, 5c) are blocked.

10. Method according to one of the preceding claims, **characterized in that** the at least one bypass line (5a, 5b, 5c) is closed by means of a pivoting movement of the device (4) for throttling the exhaust-gas flow.

11. Method according to one of the preceding claims, **characterized in that** the regulation of the exhaust-gas counterpressure and of the charge air pressure is carried out, in addition to the regulation by the device (4) for throttling the exhaust-gas flow, by a unit (107) for charge pressure regulation, into which is incorporated a wastegate which bypasses the exhaust-gas turbine (106).

12. Method according to one of the preceding claims, **characterized in that** the engine (M) has, per cylinder (101), at least one outlet valve (102) connected to an outlet system, in which outlet system is installed a device (4) for throttling which, for engine braking, is actuated in such a way that the exhaust-gas flow is throttled and the pressure increase in the exhaust gas is thus generated upstream of the device (4) for throttling, which exhaust gas flows back into the combustion chamber after an intermediate opening of the outlet valve (102) and serves to provide an increased engine braking action during the subsequent compression stroke with the outlet valve (102) still held partially open, wherein during engine braking, an intermediate opening of the outlet valve (10, 102) effected by the pressure increase generated in the exhaust gas when the device (4) for throttling is in the throttling position is subjected to a control-based intervention by virtue of the outlet valve (10, 102), which tends toward closing after the intermediate opening, being forcibly prevented from closing, and then being held partially open at the latest until the cam-controlled outlet valve opening, by the interception of a control unit (50) installed remote from the camshaft in the outlet valve actuating mechanism.

13. Method according to Claim 12, **characterized in that**, at the end of the expansion stroke, when the control of the outlet valve (10) by the camshaft takes effect again, the holding function of the control unit (50) which previously acted as a hydraulically blocked buffer is eliminated, and then the opening of the outlet valve (10) up to its full stroke, the holding of said outlet valve and the closing of said outlet valve again during the exhaust stroke are controlled by the associated normal outlet valve control cam via the outlet valve actuating mechanism with the control unit (50) which then acts therein only as a mechanical buffer.

14. Method according to either of Claims 12 and 13, **characterized in that** the control unit (50) is installed and acts in a rocker arm (30) mounted on the cylinder head and is composed of a control piston (60), which is movable with low leakage in a bore (80) of the rocker arm (30) axially between two end positions delimited mechanically by stops (90, 100) and which acts at the front on the rear end surface (120) of the outlet valve shank and which is acted on at the rear side by a compression spring (130) and hydraulically, and a control bush (70) which is screwed into a threaded section of the same rocker arm bore (80) and in whose pressure chamber (150), which is open in the forward direction toward the control piston (60), is installed the compression spring (130) acting on the control piston (60) and a check valve, which check valve permits only the introduction of pressure medium from a pressure medium supply duct (160) and has a compression-spring-loaded closing member (170), which pressure medium supply duct (160) is supplied with pressure medium via a feed duct (180) within the rocker arm, wherein a relief duct (200) leads from the pressure chamber (150) through the control bush (70) to the upper end of the latter, the outlet opening of which relief duct (200) is held closed during a braking process in the interception and holding phase of the control unit (50), for the purpose of building up and holding the pressure medium pressure in the pressure chamber (150) and for an associated deployment and holding of the control piston (60) in the deployed outlet valve interception position (C), by a stop (220) arranged fixed on the cylinder cover.

15. Method according to Claim 14, **characterized in that**, during a braking process, during the exhaust-gas-counterpressure-induced intermediate opening of the outlet valve (10), the control piston (60) is pushed out into its deployed end position on account of the forces acting in the pressure chamber (150) and following the outlet valve shank, and as a result the pressure chamber (150) which becomes larger in volume is filled with pressure medium, and therefore the control piston (60) is subsequently hydraulically blocked in the outlet valve interception position (C) and in said position, by means of the end surface (110) thereof, intercepts and correspondingly holds open the outlet valve (10) which is moving in the closing direction.

16. Method according to Claim 15, **characterized in that** the return of the control piston (60) from its outlet valve interception position (C) into its retracted basic position at the end of the holding phase takes place **in that**, upon the actuation of the rocker arm (30) by the camshaft with the normal outlet cam directly or indirectly via a push rod (40), as a result of the pivoting of said rocker arm (30) away from the cylinder-cover-side stop (220), the outlet opening of the relief duct (200) within the control bush at the upper end of the control bush (70) is opened up, and therefore the pressure medium situated in the pressure chamber (150) is relieved of pressure and is released from the volume of the control piston (60) which can now move back and is no longer blocked by the rocker arm (30), said release taking place until said control piston (60) has assumed its fully retracted basic position.

17. Method according to either of Claims 12 and 13, applied to an internal combustion engine with an underlying camshaft from which the actuation of an outlet valve takes place via a push rod and a subsequent rocker arm, **characterized in that** the control unit (50) acts in the chamber between the push rod (40) and force introduction member (230) of the rocker arm (30) in a holding sleeve (240) arranged in or on the cylinder head (20), and said control unit (50) has a control sleeve (270) coaxially movable with low leakage in the holding sleeve (240) and supported on the upper end of the push rod (40) and has a control piston (290) installed so as to be coaxially movable with low leakage in a blind bore (280) of the control sleeve (270), which control piston (290) is supported at the top on a thrust transmission part (300) articulatedly connected to the force introduction member (230) of the rocker arm (30) and is acted on at the bottom by a compression spring (310) which acts in the direction of said thrust transmission part (300), which compression spring (310) is installed **in that** part of the blind bore (280) provided below the control piston (290) and the hydraulic pressure chamber (320) thus delimited, which pressure chamber (320) is supplied with pressure medium, in particular engine oil, via a feed duct (330) within the cylinder head or block and via a feed duct (340) within the holding sleeve and via a supply duct (350), which communicates with said feed duct within the holding sleeve, within the control sleeve, wherein a check valve installed in the pressure chamber (320) prevents, by means of its spring-loaded closing member (360), a return flow of pressure medium from the pressure chamber (320) into the supply duct (350).

18. Method according to Claim 17, **characterized in that**, during a braking process, during the exhaust-gas-counterpressure-induced intermediate opening of the outlet valve (10), the control piston (290) is deployed on account of the forces acting in the pressure chamber (320), and here, the rocker arm (30) is made to perform a follow-up movement, wherein during the deployment of the control piston (290), after a stroke travel coordinated with the spring-open stroke (A-B) of the outlet valve (10), the outlet opening of a relief duct (400) within the control piston is opened up by emerging from the blind bore (280) in the control sleeve, and the pressure medium within the pressure chamber is relieved of pressure via said relief duct (400), and **in that**, at the start of the subsequent closing movement of the outlet valve (10), the control piston (290) is moved in the direction of its non-deployed basic position again by means of the rocker arm (30) which has performed a corresponding follow-up movement and the thrust transmission part (300) until the outlet opening of the relief duct (400) is closed again by the wall of the blind bore (280), as a result of which the pressure chamber (320) is shut off again, the control unit (50) is therefore hydraulically blocked, and the outlet valve (10) remains held intercepted in the corresponding partially open position (C).

19. Method according to Claims 17 and 18, **characterized in that** the elimination of the hydraulic blocking of the control piston (290) in the control sleeve (270) and the return of said control piston out of the outlet valve interception position (C) into its non-deployed basic position (A) take place when, during actuation of the push rod (40) by the camshaft with the normal outlet cam, and the associated stroke of the control sleeve (270), after a certain stroke, coordinated with the maximum opening stroke (A - D) of the outlet valve (10), of the control sleeve (270), as a result of the emergence thereof from the holding bore (280) of the holding sleeve (240), the outlet cross section of a relief bore (410) extending transversely from the pressure chamber (320) is opened up, the pressure medium situated in the pressure chamber (320) is relieved of pressure and is released from the volume of the control piston (290) which can now move back, said release taking place until said control piston has assumed its fully retracted basic position, attained when the thrust transmission part (300) sets down on the end side (420) of the control sleeve (270).

20. Method according to one of Claims 12 to 19, **characterized in that** the outlet valve (10), after the exhaust-gas-counterpressure-induced intermediate opening, is held in an interception position (C), the distance of which from the closed position amounts to approximately 1l5 to 1/20 of the full camshaft-controlled outlet valve opening stroke (A-D).

21. Method according to one of Claims 12 to 20, **characterized in that** the control unit (50) is also taken into consideration as a hydraulic valve play compensating element, a degree of play occurring in the valve actuating mechanism being compensated by means of corresponding pressure medium replenishment into the pressure chamber (150 or 320) with corresponding follow-up movement of the control piston (60 or 290) in the direction of the member (10 or 300) to be acted on.

22. Device for carrying out a method according to one of the preceding claims, having an engine (M) operating preferably on the diesel principle, which engine (M) has at least one exhaust-gas turbocharger having an exhaust-gas turbine (106) acted on by an exhaust-gas flow and having a charge air compressor (105), which exhaust-gas turbine and charge air compressor are arranged on a common shaft, having an exhaust manifold (103) which conducts the exhaust-gas flow from outlet valves (102) of the engine (M) to the exhaust-gas turbocharger, and having a device (4) for throttling the exhaust-gas flow arranged between the outlet valves (102) and the at least one exhaust-gas turbocharger, and also having at least one bypass line (5a, 5b, 5c) for conducting the exhaust-gas flow past the device (4) for throttling the exhaust-gas flow, the exhaust-gas flow being conducted through the at least one bypass line (5a, 5b, 5c) to a turbine wheel of the exhaust-gas turbine (106), the exhaust-gas flow being throttled and a pressure increase in the exhaust gas thus being generated upstream of the device (4) for throttling the exhaust-gas flow, and means being provided for measuring an exhaust-gas counterpressure (P) and a charge air pressure, **characterized in that** a control unit (104) is provided which is suitable for determining, on the basis of the measurement (S10) of the exhaust-gas counterpressure and of the charge air pressure, a position of the device (4) for throttling the exhaust-gas flow to obtain a predetermined braking action, and the control unit (104) carries out regulation of the exhaust-gas counterpressure and of the charge air pressure by means of the device (4) for throttling the exhaust-gas flow corresponding to the determined position of the device (4) for throttling the exhaust-gas flow, and the control unit (104) closes further (S30) the position of the device (4) for throttling the exhaust-gas flow if the present exhaust-gas counterpressure is lower than a desired exhaust-gas counterpressure and the charge air pressure corresponds to a predetermined value (S20) or alternatively opens further (S50) the position of the device (4) for throttling the exhaust-gas flow if the present exhaust-gas counterpressure is lower than a desired exhaust-gas counterpressure and the charge air pressure is lower than a predetermined value (S40).

## Revendications

1. Procédé de freinage moteur d'un moteur (M) fonctionnant de préférence selon le principe diesel, qui présente au moins un turbocompresseur à gaz d'échappement sollicité par un flux de gaz d'échappement avec une turbine à gaz d'échappement (106) et un compresseur d'air de suralimentation (105), lesquels sont disposés sur un arbre commun, avec un collecteur de gaz d'échappement (103), qui guide le flux de gaz d'échappement depuis des soupapes d'échappement (102) du moteur (M) jusqu'au turbocompresseur à gaz d'échappement, et avec un dispositif (4) d'étranglement du flux de gaz d'échappement disposé entre les soupapes d'échappement (102) et l'au moins un turbocompresseur à gaz d'échappement, et avec au moins une conduite de dérivation (5a, 5b, 5c) pour guider le flux de gaz d'échappement devant le dispositif (4) d'étranglement du flux de gaz d'échappement, le flux de gaz d'échappement étant guidé par l'au moins une conduite de dérivation (5a, 5b, 5c) vers une roue de turbine de la turbine à gaz d'échappement (106), le flux de gaz d'échappement étant étranglé et une augmentation de pression dans le gaz d'échappement étant ainsi générée en amont du dispositif (4) d'étranglement du flux de gaz d'échappement, une mesure d'une contrepression de gaz d'échappement, ainsi que d'une pression d'air de suralimentation, ayant lieu, **caractérisé en ce que** sur la base de la mesure (S10) de la contrepression de gaz d'échappement et de la pression d'air de suralimentation, une position du dispositif (4) d'étranglement du flux de gaz d'échappement est déterminée pour obtenir une puissance de freinage prédéterminée et une régulation de la contrepression de gaz d'échappement ainsi que de la pression d'air de suralimentation est effectuée par le dispositif (4) d'étranglement du flux de gaz d'échappement en fonction de la position déterminée du dispositif (4) d'étranglement du flux de gaz d'échappement et **en ce que** si la contrepression de gaz d'échappement actuelle est inférieure à une contrepression de gaz d'échappement souhaitée et que la pression d'air de suralimentation correspond à une valeur prédéterminée (S20), la position du dispositif (4) d'étranglement du flux de gaz d'échappement est davantage fermée (S30) ou en variante, si la contrepression de gaz d'échappement actuelle est inférieure à une contrepression de gaz d'échappement souhaitée et que la pression d'air de suralimentation est inférieure à une valeur prédéterminée (S40), la position du dispositif (4) d'étranglement du flux de gaz d'échappement est davantage ouverte (S50).

2. Procédé selon la revendication 1, **caractérisé en ce que** la position optimale du dispositif (4) d'étranglement du flux de gaz d'échappement dans une première plage de régime du moteur (M) est une position de fermeture (S₂) dans laquelle la section transversale d'un système de gaz d'échappement est bloquée et le flux de gaz d'échappement est guidé par l'au moins une conduite de dérivation (5a, 5b, 5c) devant le dispositif (4) d'étranglement du flux de gaz d'échappement.

3. Procédé selon la revendication 1, **caractérisé en ce que** la position optimale du dispositif (4) d'étranglement du flux de gaz d'échappement dans une première plage de régime du moteur (M) est une position de fermeture (S₁) dans laquelle au moins une partie de la section transversale du système de gaz d'échappement est libérée et au moins une partie du flux de gaz d'échappement est guidée par l'au moins une conduite de dérivation (5a, 5b, 5c) devant le dispositif (4) d'étranglement du flux de gaz d'échappement.

4. Procédé selon l'une quelconque des revendications précédentes, **caractérisé en ce que** la position optimale du dispositif (4) d'étranglement du flux de gaz d'échappement dans une deuxième plage de régime du moteur est une position de fermeture (S₁) dans laquelle au moins une partie de la section transversale du système de gaz d'échappement est libérée et une partie du flux de gaz d'échappement est guidée par l'au moins une conduite de dérivation (5a, 5b, 5c) devant le dispositif (4) d'étranglement du flux de gaz d'échappement.

5. Procédé selon l'une quelconque des revendications précédentes, **caractérisé en ce que** la première plage de régime du moteur (M) est une plage de régime inférieure ou égale à 1400 trlm et la deuxième plage de régime du moteur est une plage de régime supérieure à 1400 tr/m jusqu'à un régime maximal du moteur (M).

6. Procédé selon l'une quelconque des revendications précédentes, **caractérisé en ce que** pour obtenir une puissance de freinage maximale pour un régime du moteur respectif, on ajuste tout d'abord une pression d'air de suralimentation maximale et à l'obtention de la pression d'air de suralimentation maximale pour le régime du moteur, on effectue une régulation de la contrepression de gaz d'échappement maximale.

7. Procédé selon l'une quelconque des revendications précédentes, **caractérisé en ce qu'**au moins une position du dispositif (4) d'étranglement du flux de gaz d'échappement correspond à une contrepression de gaz d'échappement déterminée.

8. Procédé selon la revendication 7, **caractérisé en ce qu'**une détermination d'une position correcte du dispositif (4) d'étranglement du flux de gaz d'échappement est réalisée à partir d'une comparaison de la pression d'air de suralimentation actuelle avec une pression d'air de suralimentation de consigne à la contrepression de gaz d'échappement actuelle.

9. Procédé selon l'une quelconque des revendications précédentes, **caractérisé en ce que** dans une plage de régime de 0 à 1000 tr/m du moteur (M), le dispositif (4) d'étranglement du flux de gaz d'échappement est réglé dans une position de fermeture (S₂), dans laquelle à la fois la section transversale du système de gaz d'échappement et l'au moins une conduite de dérivation (5a, 5b, 5c) sont bloquées.

10. Procédé selon l'une quelconque des revendications précédentes, **caractérisé en ce que** l'au moins une conduite de dérivation (5a, 5b, 5c) est fermée par un pivotement du dispositif (4) d'étranglement du flux de gaz d'échappement.

11. Procédé selon l'une quelconque des revendications précédentes, **caractérisé en ce que** la régulation de la contrepression de gaz d'échappement ainsi que de la pression d'air de suralimentation sont effectuées en plus de la régulation par le dispositif (4) d'étranglement du flux de gaz d'échappement par un dispositif (107) de régulation de la pression de suralimentation, dans lequel est incorporée au moins une soupape de décharge entourant la turbine à gaz d'échappement (106).

12. Procédé selon l'une quelconque des revendications précédentes, **caractérisé en ce que** le moteur (M) présente pour chaque cylindre (101) au moins une soupape d'échappement (102) raccordée à un système d'échappement, dans lequel système d'échappement est incorporé le dispositif (4) d'étranglement, lequel est commandé pour le freinage moteur de telle sorte que l'écoulement de gaz d'échappement soit étranglé et qu'en amont du dispositif (4) d'étranglement il se produise ainsi l'augmentation de pression dans le gaz d'échappement, lequel reflue dans la chambre de combustion après une ouverture intermédiaire de la soupape d'échappement (102) et pendant la phase de compression suivante, assure une puissance de freinage moteur accrue alors que la soupape d'échappement (102) est encore maintenue partiellement ouverte, une intervention par une technique de commande étant réalisée lors du freinage moteur sur une ouverture intermédiaire de la soupape d'échappement (10, 102), qui est provoquée lorsque le dispositif (4) d'étranglement se trouve dans la position d'étranglement par l'augmentation de pression réalisée dans le gaz d'échappement, **en ce que** la soupape d'échappement (10, 102) ayant tendance à se fermer après l'ouverture intermédiaire est obligatoirement empêchée de commencer à se fermer par un dispositif de commande (50) intégré à distance de l'arbre à cames dans le mécanisme de commande de soupape d'échappement et est maintenue partiellement ouverte au plus tard jusqu'à l'ouverture de la soupape d'échappement commandée par came.

13. Procédé selon la revendication 12, **caractérisé en ce qu'**à la fin de la phase de détente lorsque la commande du côté de l'arbre à cames de la soupape d'échappement (10) est à nouveau active, la fonction de maintien du dispositif de commande (50) agissant préalablement en tant que tampon à blocage hydraulique est supprimée et ensuite l'ouverture de la soupape d'échappement (10) est commandée jusqu'à sa course complète, dont le maintien et la refermeture pendant la phase d'échappement sont commandés par la came de commande de soupape d'échappement normale associée, par le biais du mécanisme de commande de soupape d'échappement, avec le dispositif de commande (50) n'agissant alors dans celui-ci plus que comme un tampon mécanique.

14. Procédé selon l'une quelconque des revendications 12 ou 13, **caractérisé en ce que** le dispositif de commande (50) agit de manière intégrée dans un levier oscillant (30) monté du côté de la culasse de cylindre et se compose d'un piston de commande (60) déplaçable axialement avec faible fuite dans un alésage (80) du levier oscillant (30) entre deux positions de fin de course limitées mécaniquement par des butées (90, 100), agissant à favant sur la face frontale arrière (120) de la tige de soupape d'échappement et sollicité hydrauliquement et du côté arrière par un ressort de compression (130) et d'un manchon de commande (70) vissé dans une portion filetée du même alésage (80) du levier oscillant, dans l'espace de pression (150) dudit manchon de commande, ouvert vers l'avant vers le piston de commande (60), le ressort de compression (130) sollicitant le piston de commande (60) ainsi qu'une soupape de non-retour ne permettant que l'entrée de fluide sous pression depuis un canal d'alimentation en fluide sous pression (160) étant incorporés avec un organe de fermeture (170) sollicité par le ressort de compression, lequel canal d'alimentation en fluide sous pression (160) est alimenté en fluide sous pression par le biais d'un canal de distribution (180) interne au levier oscillant, un canal de détente (200) conduisant depuis l'espace de pression (150) à travers le manchon de commande (70) jusqu'à son extrémité supérieure, dont l'ouverture de sortie est maintenue fermée pendant une opération de freinage dans la phase d'interception et de retenue du dispositif de commande (50) en vue d'augmenter et de maintenir la pression de fluide sous pression dans l'espace de pression (150) et pendant un déploiement associé et un maintien du piston de commande (60) dans la position d'interception sortie de la soupape d'échappement (C) par une butée (220) disposée de manière fixée au couvercle du cylindre.

15. Procédé selon la revendication 14, **caractérisé en ce que** pendant une opération de freinage lors de l'ouverture intermédiaire de la soupape d'échappement (10) provoquée par la contrepression de gaz d'échappement, le piston de commande (60), du fait des forces agissant dans l'espace de pression (160), est expulsé dans sa position de fin de course sortie en suivant la tige de soupape d'échappement, et de ce fait l'espace de pression (150) augmentant de volume est rempli de fluide sous pression, de sorte que le piston de commande (60) est ensuite bloqué hydrauliquement dans la position d'interception de la soupape d'échappement (C) et, dans cette position, intercepte et maintient ouverte en conséquence la soupape d'échappement (10) se déplaçant dans le sens de la fermeture par sa face frontale (110).

16. Procédé selon la revendication 15, **caractérisé en ce que** le retour du piston de commande (60) depuis sa position d'interception de la soupape d'échappement (C) dans sa position de base rentrée à la fin de la phase de maintien a lieu de telle manière que lors d'un actionnement du levier oscillant (30) se produisant du côté de l'arbre à cames avec la came de sortie normale directement ou indirectement par le biais d'une tige poussoir (40), du fait de son pivotement à l'écart de la butée (220) du côté du couvercle du cylindre, l'ouverture de sortie du canal de détente (200) interne au manchon de commande soit libérée à l'extrémité supérieure du manchon de commande (70), de sorte que le fluide sous pression se trouvant dans l'espace de pression (150) soit détendu en pression et soit détendu en volume par le piston de commande (60) à présent capable de revenir en arrière et n'étant plus bloqué par le levier oscillant (30), jusqu'à ce que le piston de commande ait adopté sa position de base complètement rentrée.

17. Procédé selon l'une quelconque des revendications 12 et 13, utilisé dans un moteur à combustion interne avec un arbre à cames situé en bas à partir duquel l'actionnement d'une soupape d'échappement se produit par le biais d'une tige poussoir et d'un levier oscillant suivant, **caractérisé en ce que** le dispositif de commande (50) agit dans l'espace entre la tige poussoir (40) et un organe d'introduction de force (230) du levier oscillant (30) dans un manchon de réception (240) disposé dans ou sur la culasse de cylindre (20), et présente un manchon de commande (270) pouvant être déplacé coaxialement avec faible fuite dans le manchon de réception (240) supporté par le bas à l'extrémité supérieure de la tige poussoir (40) ainsi qu'un piston de commande (290) incorporé de manière déplaçable coaxialement et avec faible fuite dans un alésage borgne (280) du manchon de commande (270), lequel piston de commande est supporté en haut au niveau d'une partie de transfert de poussée (300) connectée de manière articulée à l'organe d'introduction de force (230) du levier oscillant (30) et est sollicité en bas par un ressort de compression (310) agissant dans la direction de la partie de transfert de poussée, lequel ressort de compression est intégré dans la partie de l'alésage borgne (280) disposée en dessous du piston de commande (290) et dans l'espace de pression (320) hydraulique limité de cette manière, lequel espace de pression est alimenté en fluide sous pression, notamment en huile de moteur, par le biais d'un canal de distribution (330) interne à la culasse de cylindre ou au bloc-cylindres et par le biais d'un canal de distribution (340) interne au manchon de réception et d'un canal d'alimentation (350) interne au manchon de commande et communiquant avec le canal de distribution (340), une soupape de non-retour incorporée dans l'espace de pression (320) empêchant avec son organe de fermeture sollicité par ressort (360) un reflux de fluide sous pression depuis l'espace de pression (320) jusque dans le canal d'alimentation (350).

18. Procédé selon la revendication 17, **caractérisé en ce que** pendant une opération de freinage, dans le cas d'une ouverture partielle de la soupape d'échappement (10) provoquée par la contrepression de gaz d'échappement, le piston de commande (290) est sorti du fait des forces agissant dans l'espace de pression (320), et le levier oscillant (30) est en l'occurrence asservi, et lors de la sortie du piston de commande (290) suivant une distance de course adaptée à la course de montée (A-B) de la soupape d'échappement (10), l'ouverture de sortie d'un canal de détente (400) interne au piston de commande étant libérée par éjection hors de l'alésage borgne (280) du côté du manchon de commande et par le biais de ce canal de détente (400), le fluide sous pression interne à l'espace de pression étant détendu en pression, et **en ce qu'**au début du mouvement de fermeture subséquent de la soupape d'échappement (10) par le biais du levier oscillant (30) asservi en conséquence et de la partie de transfert de poussée (300), le piston de commande (290) est ramené dans la direction de sa position de base rentrée jusqu'à ce que l'ouverture de sortie du canal de détente (400) soit à nouveau fermée par la paroi de l'alésage borgne (280), de sorte que l'espace de pression (320) soit à nouveau bloqué, afin que le dispositif de commande (50) reste bloqué hydrauliquement et que la soupape d'échappement (10) reste maintenue de manière interceptée dans la position d'ouverture partielle correspondante (C).

19. Procédé selon les revendications 17 et 18, **caractérisé en ce que** la suppression du blocage hydraulique du piston de commande (290) dans le manchon de commande (270) et son retour à partir de la position d'interception de la soupape d'échappement (C) jusque dans sa position de base rentrée (A) ont lieu quand, lors d'un actionnement de la tige poussoir (40) se produisant du côté de l'arbre à cames avec la came de sortie normale et lors de la course associée du manchon de commande (270) en fonction d'une course déterminée du manchon de commande (270) adaptée à la course d'ouverture maximale (A-D) de la soupape d'échappement (1D), par son éjection hors de l'alésage de réception (280) du manchon de réception (240), la section transversale de sortie d'un alésage de détente (410) partant transversalement de l'espace de pression (320) est libérée, afin que le fluide sous pression se trouvant dans l'espace de pression (320) soit détendu en pression et soit détendu en volume par le piston de commande (290) à présent capable de revenir en arrière, jusqu'à ce que ce piston de commande ait adopté sa position de base complètement rentrée qui est obtenue lorsque la partie de transfert de poussée (300) repose sur la face frontale (420) du manchon de commande (270).

20. Procédé selon l'une quelconque des revendications 12 à 19, **caractérisé en ce que** la soupape d'échappement (10), après l'ouverture intermédiaire provoquée par la contrepression de gaz d'échappement, est maintenue dans une position d'interception (C), dont la distance à la position de fermeture vaut approximativement 1/5 à 1/20 de la course d'ouverture de la soupape d'échappement complète commandée par l'arbre à cames (A-D).

21. Procédé selon l'une quelconque des revendications 12 à 20, **caractérisé en ce que** le dispositif de commande (50) est utilisé également en tant qu'organe de compensation hydraulique du jeu des soupapes, un jeu se produisant dans le mécanisme de commande de soupape étant compensé par un remplissage correspondant de fluide sous pression dans l'espace de pression (150, respectivement 320) avec asservissement correspondant du piston de commande (60, respectivement 290) dans la direction de l'organe à solliciter (10, respectivement 300).

22. Dispositif pour mettre en ouvre un procédé selon l'une quelconque des revendications précédentes, comprenant un moteur (M) fonctionnant de préférence selon le principe diesel, qui présente au moins un turbocompresseur à gaz d'échappement sollicité par un flux de gaz d'échappement avec une turbine à gaz d'échappement (106) et un compresseur d'air de suralimentation (105), lesquels sont disposés sur un arbre commun, avec un collecteur de gaz d'échappement (103), qui guide le flux de gaz d'échappement depuis des soupapes d'échappement (102) du moteur (M) jusqu'au turbocompresseur à gaz d'échappement, et avec un dispositif (4) d'étranglement du flux de gaz d'échappement disposé entre les soupapes d'échappement (102) et l'au moins un turbocompresseur à gaz d'échappement, et avec au moins une conduite de dérivation (5a, 5b, 5c) pour guider le flux de gaz d'échappement devant le dispositif (4) d'étranglement du flux de gaz d'échappement, le flux de gaz d'échappement étant guidé par l'au moins une conduite de dérivation (5a, 5b, 5c) vers une roue de turbine de la turbine à gaz d'échappement (108), le flux de gaz d'échappement étant étranglé et une augmentation de pression dans le gaz d'échappement étant ainsi générée en amont du dispositif (4) d'étranglement du flux de gaz d'échappement, et des moyens de mesure d'une contrepression de gaz d'échappement (P), ainsi que d'une pression d'air de suralimentation étant prévus, **caractérisé en ce qu'**un dispositif de commande (104) est prévu, lequel est approprié, sur la base de la mesure (S10) de la contrepression de gaz d'échappement et de la pression d'air de suralimentation, pour déterminer une position du dispositif (4) d'étranglement du flux de gaz d'échappement afin d'obtenir une puissance de freinage prédéterminée et le dispositif de commande (104) effectue une régulation de la contrepression de gaz d'échappement ainsi que de la pression d'air de suralimentation par le dispositif (4) d'étranglement du flux de gaz d'échappement en fonction de la position déterminée du dispositif (4) d'étranglement du flux de gaz d'échappement et le dispositif de commande (104), si la contrepression de gaz d'échappement actuelle est inférieure a une contrepression de gaz d'échappement souhaitée et que la pression d'air de suralimentation correspond à une valeur prédéterminée (S20), ferme davantage (530) la position du dispositif (4) d'étranglement du flux de gaz d'échappement ou en variante, si la contrepression de gaz d'échappement actuelle est inférieure à une contrepression de gaz d'échappement souhaitée et que la pression d'air de suralimentation est inférieure à une valeur prédéterminée (S40), ouvre davantage (S50) la position du dispositif (4) d'étranglement du flux de gaz d'échappement.
